(19) Europäisches Patentamt
European Patent Office
Office européen des brevets

(11) **EP 3 892 597 B1**

(12) **EUROPÄISCHE PATENTSCHRIFT**

(45) Veröffentlichungstag und Bekanntmachung des Hinweises auf die Patenterteilung:
**30.10.2024   Patentblatt 2024/44**

(21) Anmeldenummer: **21163932.3**

(22) Anmeldetag: **22.03.2021**

(51) Internationale Patentklassifikation (IPC):
*C03C 17/28* (2006.01)    *C03C 17/30* (2006.01)
*C03C 3/089* (2006.01)    *C03C 17/00* (2006.01)
*C03C 3/097* (2006.01)    *F24B 1/192* (2006.01)
*F24C 15/04* (2006.01)    *F24C 15/10* (2006.01)

(52) Gemeinsame Patentklassifikation (CPC):
**C03C 3/097; C03C 3/089; C03C 17/008;**
**C03C 17/30; F24C 15/10;** C03C 2217/44;
C03C 2217/45; C03C 2217/485; C03C 2218/119;
F24B 1/192; F24C 15/04

(54) **PIGMENT-BESCHICHTETES GLASSUBSTRAT FÜR EIN KOCHFELD**

PIGMENT COATED GLASS SUBSTRATE FOR A COOKTOP

SUPPORT EN VERRE ENDUIT DE PIGMENT POUR UNE PLAQUE DE CUISSON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2020   DE 202020001408 U**

(43) Veröffentlichungstag der Anmeldung:
**13.10.2021   Patentblatt 2021/41**

(73) Patentinhaber: **SCHOTT AG**
**55122 Mainz (DE)**

(72) Erfinder:
• **KRANZ, Maxmilian**
**55129 Mainz (DE)**
• **SCHILLING, Dr. Franziska**
**55288 Udenheim (DE)**
• **OHL, Gerold**
**55286 Sulzheim (DE)**
• **MILANOVSKA, Angelina**
**55120 Mainz (DE)**
• **LANGER, Philipp**
**67577 Alsheim (DE)**

(74) Vertreter: **Schott Corporate IP**
**Hattenbergstraße 10**
**55122 Mainz (DE)**

(56) Entgegenhaltungen:
EP-A1- 2 223 900        WO-A1-2011/144671
WO-A2-2004/085555    WO-A2-2014/086619

**Beschreibung**

Die Erfindung betrifft ein spezielles pigment-beschichtetes Glassubstrat für ein Kochfeld, ein spezielles Verfahren zur Herstellung eines pigment-beschichteten Glassubstrats, und ein pigment-beschichtetes Glassubstrat für ein Kochfeld, welches durch das spezielle Verfahren herstellbar ist.

Stand der Technik

Aus dem Stand der Technik sind semitransparente Schichten auf Glas und Glaskeramik bekannt, die beispielsweise in Anzeigenbereichen bei Kochflächen eingesetzt werden. Insbesondere im Bereich von Kochfeldern werden 7-Segment-Anzeigen verwendet, welche beispielsweise die Heizstufe widergeben oder durch einen Punkt kennzeichnen, welche Kochzonen höhere Temperaturen aufweisen. Des Weiteren können unter dem Glassubstrat Displays angeordnet sein, die komplexe Informationen, z.B. Graphiken, Bilder, oder Ähnliches wiedergeben.

Aufgrund einer Vielfalt an möglichen Farbeindrücken und Designs hat sich in den letzten Jahren die Verwendung von transparenten Glassubtraten für Kochflächen etabliert. Die transparente Glaskeramik hat jedoch den Nachteil, dass die Bauteile unterhalb der Kochfläche sichtbar sind. Um eine entsprechende Blickdichte zu gewährleisten, kann das Glassubstrat, wie aus dem Stand der Technik bekannt, mit unterschiedlichsten Schichten versehen werden. In der Regel wird das Glassubstrat zunächst mit einer farbgebenden Schicht (im folgenden Schicht B genannt) und anschließend mit einer Versiegelungsschicht versehen. Um die Sichtbarkeit einer 7-Segment-Anzeige oder eines Displays, welche(s) unter der Kochfläche angebracht ist, zu gewährleisten, bedarf es in diesem Bereich einer semitransparenten Schicht (im folgenden Schicht A genannt). Diese muss eine ausreichende Blickdichte gewährleisten, jedoch das beispielsweise rote Licht der 7-Segment-Anzeige durchlassen und im sichtbaren Wellenlängenbereich keine Streuzentren aufweisen.

Aus dem Stand der Technik sind semitransparente Schichten mit verschiedenen Farbmitteln bekannt. Farbmittel können aus Pigmenten (unlöslich) oder Farbstoffen (zumindest teilweise löslich) ausgewählt werden. Farbstoffe haben jedoch den Nachteil, dass diese nicht sehr hitzebeständig sind und manche Effekte lassen sich nur mit Pigmenten erreichen. Da aufgrund ihrer Hitzebeständigkeit unter den Heizelementen farbgebende Schichten mit Pigmenten verwendet werden und ein homogenes Sichtbild gewünscht wird, sollten ebenfalls diese Pigmente in der semitransparenten Schicht verwendet werden. Durch die Zugabe von Graphit lässt sich zusätzlich die Transparenz einstellen. Schichten, sowohl mit Farbmitteln also auch mit Pigmenten, können ein hohes Lichtabsorptionsvermögen aufweisen. Zudem beeinträchtigt die Streuung der Schichten die Sichtbarkeit der Anzeige oder des Displays. Schichten, die ein Pigment enthalten, sind z.B. aus EP 2 223 900 A1 bekannt. Weitere spezielle beschichtete Glassubstrate sind in WO 2004/085555 A2, WO 2011/144671 A1 und WO 2014/086619 A2 offenbart.

Ein Aspekt, dem bisher wenig Aufmerksamkeit geschenkt wurde, ist die Bildkörnung (auch Körnung genannt) der Schicht. Während in Farbstoffschichten, die Farbstoffe homogen in der Matrix gelöst sind, kann es bei Schichten mit Feststoffen, z.B. Pigmenten, vorkommen, dass sich Feststoffe zusammenballen, was zu einer Zerrissenheit gleichmäßig semitransparenter Flächen verantwortlich ist. Unter dem Begriff Bildkörnung werden hierin lokale Helligkeitsschwankungen einer (durch-)leuchtenden Fläche verstanden. Der Effekt der Bildkörnung ähnelt der Körnung von Film in der Fotografie oder dem Bildrauschen in der Digitalfotografie. 7-Segment-Anzeigen oder Displays, die unter Schichten mit einer hohen Bildkörnung angeordnet sind, sind schlechter erkennbar. Demzufolge sind Details von hochaufgelösten Displays nicht mehr erkennbar und sehr kleine 7-Segment-Anzeigen schwer realisierbar.

Aufgabe der vorliegenden Erfindung ist es, ein pigment-beschichtetes Glassubstrat für ein Kochfeld bereitzustellen, welches:

- eine gute Sichtbarkeit der Anzeige oder des Displays ermöglicht,
- eine definierte Transparenz aufweist; und/oder
- günstig herzustellen ist.

Beschreibung der Erfindung

Die vorliegende Erfindung umfasst ein pigment-beschichtetes Glassubstrat für ein Kochfeld, umfassend:

  i) ein Glassubstrat,
  wobei das Glassubstrat ein Glas oder eine Glaskeramik umfasst, bevorzugt aus einem Glas oder einer Glaskeramik besteht; und
  ii) ein Schichtsystem, umfassend:

    eine Schicht A, enthaltend:

a) eine Matrix,
wobei die Matrix Silizium, Kohlenstoff und Sauerstoff enthält,
b) ein Pigment, bevorzugt ein organisches oder anorganisches Pigment, mehr bevorzugt ein Effektpigment, und
c) optional Graphit

wobei die Schicht A eine Bildkörnung von 35 % oder weniger aufweist; und wobei das pigment-beschichtete Glassubstrat durch ein Verfahren erhältlich ist, wobei die Schicht A auf dem Glassubstrat durch die folgenden Schritte gebildet wird:

i) Herstellen einer ersten Komponente durch:

1) Mischen eines ersten Gemisches, enthaltend:

a) eine Verbindung der Formel $Si(OR^4)_x(OC=OR^5)_yR^6_{4-x-y}$,

wobei x+y gleich 1 bis 4 ist,
wobei $R^4$ bis $R^6$ unabhängig ausgewählt sind aus einem organischen Rest mit 1 bis 20 Kohlenstoffatomen, -OH und -H;

b) einem Hydrolysekatalysator;
c) Wasser; und
d) optional Silikon;

2) Einengen unter vermindertem Druck und gegebenenfalls erhöhter Temperatur des ersten Gemisches; und
3) optional Zugabe von Silikon;

um eine erste Komponente zu erhalten;
ii) Herstellen einer Farbpaste durch Mischen eines zweiten Gemisches, enthaltend:

a) die erste Komponente;
b) Pigment;
c) optional Graphit;
d) Lösungsmittel; und
e) Silikon;

um eine Farbpaste zu erhalten; und

wobei die Farbpaste einen Anteil von 10 bis 60 Gew.-% Silikon enthält, und wobei das Verhältnis von Filmbildner [Gew.-%] / Silikon [Gew.-%] einen Wert von 0,2 oder mehr und 0,8 oder weniger aufweist, wobei der Filmbildner die folgende Formel aufweist:

$$Si(OR^4)_x(OC=OR^5)_yR^6_{4-x-y},$$

wobei x, y und $R^4$ bis $R^6$ wie oben definiert sind;

iii) Auftragen der Farbpaste auf ein Glassubstrat; und
iv) Trocknen der aufgetragenen Farbpaste, um ein pigment-beschichtetes Glassubstrat zu erhalten.

Zudem offenbart ist ein pigment-beschichtetes Glassubstrat für ein Kochfeld, umfassend:

i) ein Glassubstrat,
wobei das Glassubstrat ein Glas oder eine Glaskeramik umfasst, bevorzugt aus einem Glas oder einer Glaskeramik besteht; und
ii) ein Schichtsystem, umfassend:

eine Schicht A, enthaltend:

a) eine Matrix,
wobei die Matrix Silizium, Kohlenstoff und Sauerstoff enthält,
b) ein Pigment, bevorzugt ein organisches oder anorganisches Pigment, mehr bevorzugt ein Effektpigment, und
c) optional Graphit

wobei die Schicht A eine Bildkörnung von 35 % oder weniger aufweist.

Des Weiteren bezieht sich die Erfindung auf ein Verfahren zur Herstellung eines pigment-beschichteten Glassubstrats, wobei eine Schicht A auf dem Glassubstrat durch die folgenden Schritte gebildet wird:

i) Herstellen einer ersten Komponente durch:

1) Mischen eines ersten Gemisches, enthaltend:

a) eine Verbindung der Formel $Si(OR^4)_x(OC=OR^5)_yR^6_{4-x-y}$,

wobei x+y gleich 1 bis 4 ist,
wobei $R^4$ bis $R^6$ unabhängig ausgewählt sind aus einem organischen Rest mit 1 bis 20 Kohlenstoffatomen, -OH und -H;

b) einem Hydrolysekatalysator;
c) Wasser; und
d) optional Silikon;

2) Einengen unter vermindertem Druck und gegebenenfalls erhöhter Temperatur des ersten Gemisches; und
3) optional Zugabe von Silikon;

um eine erste Komponente zu erhalten;
ii) Herstellen einer Farbpaste durch Mischen eines zweiten Gemisches, enthaltend:

a) die erste Komponente;
b) Pigment;
c) optional Graphit;
d) Lösungsmittel; und
e) Silikon;

um eine Farbpaste zu erhalten; und
wobei die Farbpaste einen Anteil von 10 bis 60 Gew.-% Silikon enthält, und
wobei das Verhältnis von Filmbildner [Gew.-%] / Silikon [Gew.-%] einen Wert von 0,2 oder mehr und 0,8 oder weniger aufweist,
wobei der Filmbildner die folgende Formel aufweist:

$$Si(OR^4)_x(OC=OR^5)_yR^6_{4-x-y},$$

wobei x, y und $R^4$ bis $R^6$ wie oben definiert sind;

iii) Auftragen der Farbpaste auf ein Glassubstrat; und
iv) Trocknen der aufgetragenen Farbpaste, um ein pigment-beschichtetes Glassubstrat zu erhalten.

Darüber hinaus offenbart hierin ist ein pigment-beschichtetes Glassubstrat, erhältlich durch ein hierin beschriebenes Verfahren.
Eine weitere Ausführungsform der Erfindung ist ein Kochfeld, ein Backofen, eine Kaminsichtscheibe, eine Mikrowelle, bevorzugt ein Kochfeld, mehr bevorzugt ein Kochfeld, das eine 7-Segment-Anzeige oder ein Display enthält, umfassend ein hierin beschriebenes pigment-beschichteten Glassubstrat.

Definitionen

Wenn nicht anders definiert, beziehen sich alle % Angaben auf Gew.-%. Die Angaben in Gewichtsprozent bei dem Glassubstrat beziehen sich dabei auf die Glaszusammensetzung auf Oxidbasis. Wenn nicht explizit erwähnt beziehen sich alle Gew.-% auf die Einwaagen. Dem Fachmann ist bewusst, dass während der Herstellung der Farbpaste und während dem Aushärten der Farbpaste die eingewogenen Komponenten zumindest teilweise reagieren.

Hierin soll jeder Ausdruck im Singular auch den Plural einschließen und jeder Ausdruck im Plural soll auch den Singular einschließen, sofern nichts Anderes angegeben ist. Insbesondere gelten zudem hierin alle Einschränkungen und bevorzugten Ausführungsformen einer Schicht (z.B. Schicht A) auch für eine andere Schicht (z.B. Schicht B), wenn nicht anders angegeben. Ferner gelten alle Einschränkungen und bevorzugten Ausführungsformen des pigment-beschichteten Glassubstrats auch für das Verfahren zur Herstellung eines pigment-beschichteten Glassubstrats und umgekehrt, sofern nichts Anderes angegeben ist. Bevorzugte Ausführungsformen eines hierin beschriebenen pigment-beschichteten Glassubstrats gelten ebenfalls für alle hierin beschriebenen pigment-beschichteten Glassubstrate, sofern nichts Anderes angegeben ist.

Hierin sind $R^1$ bis $R^6$ unabhängig ausgewählt aus einem organischen Rest mit 1 bis 20 Kohlenstoffatomen, -OH und -H.

Bevorzugt sind $R^1$ bis $R^6$ unabhängig ausgewählt aus einer Liste bestehend aus Alkyl, Heteroalkyl, Cycloalkyl, Alkyl-Cycloalkyl, Heteroalkyl-Cycloalkyl, Heterocycloalkyl, Alkyl-Heterocycloalkyl, Heteroalkyl-Heterocycloalkyl, Aryl, Alkyl-Aryl, Heteroalkyl-Aryl, Heteroaryl, Alkyl-Heteroaryl, Heteroalkyl-Heteroaryl, -OH und H; mehr bevorzugt aus unsubstituiertes Alkyl, Heteroalkyl, Alkyl-Cycloalkyl, Heteroalkyl-Cycloalkyl, Heterocycloalkyl, Alkyl-Heterocycloalkyl und Heteroalkyl-Heterocycloalkyl; mehr bevorzugt unsubstituiertes Alkyl; mehr bevorzugt Methyl und Ethyl.

Jeder Rest $R^1$ bis $R^6$ kann unabhängig substituiert oder unsubstituiert sein, bevorzugt unsubstituiert. Mögliche Substituenten sind zum Beispiel Halogene (z.B. F, Cl, Br und/oder I), eine Alkoxy-Gruppe (z.B. Methoxy oder Ethoxy), -NH$_2$ und -OH. Des Weiteren kann jeder Rest $R^1$ bis $R^6$ unabhängig linear oder verzweigt sein, bevorzugt ist jeder Rest linear. Bevorzugt sind $R^1$ und $R^2$ gleich. Bevorzugt sind $R^4$ und $R^5$ gleich, mehr bevorzugt sind $R^4$ bis $R^6$ gleich.

Hierin sind die Variablen x und y unabhängig ausgewählt aus 1 bis 4, bevorzugt 2 bis 4, mehr bevorzugt gleich 3 oder 4. Bevorzugt ist x gleich 3 oder 4 und y gleich 0 oder 1, mehr bevorzugt y gleich 0.

Glassubstrat

Gemäß der Erfindung umfasst das Glassubstrat ein Glas oder eine Glaskeramik. Bevorzugt besteht das Glassubstrat aus einem Glas oder einer Glaskeramik.

Das Glas ist bevorzugt ein Borosilikatglas oder Alumosilikatglas, mehr bevorzugt ein Borosilikatglas; mehr bevorzugt umfassend, mehr bevorzugt bestehend aus, in Gew.-%:

| | |
|---|---|
| SiO$_2$ | 50 - 90, bevorzugt 60 - 74; |
| B$_2$O$_3$ | 5 - 15, bevorzugt 8 - 12; |
| X$_2$O | 1 - 15, bevorzugt 5 - 10, wobei X ausgewählt ist aus Na, K und/oder Li; |
| Al$_2$O$_3$ | 0 - 15, bevorzugt 3 - 8; |
| YO | 0 - 15, bevorzugt 1 - 5, wobei Y ausgewählt ist aus Ca, Sr und/oder Mg; |
| ZnO | 0 - 5, bevorzugt 0,1 bis 2; |
| TiO$_2$ | 0 - 10, bevorzugt 0,1 bis 5; |
| ZrO$_2$ | 0 - 5, bevorzugt 0,1 bis 2; |
| SnO$_2$ | 0 - 1, bevorzugt 0,01 bis 0,05; |
| P$_2$O$_5$ | 0 - 5, bevorzugt 0,01 bis 2; |
| MoOs | 0 - 1, bevorzugt 0,001 bis 0,05; |
| Fe$_2$O$_3$ | 0 - 0,1, bevorzugt 0,001 bis 0,05; |
| V$_2$O$_5$ | 0 - 0,1, bevorzugt 0,001 bis 0,05; |
| Nd$_2$O$_3$ | 0 - 0,1, bevorzugt 0,001 bis 0,05; |
| Zusätze | 0 - 2; und |

unvermeidbaren Verunreinigungen.

Die Glaskeramik ist bevorzugt eine LAS-Glaskeramik, mehr bevorzugt eine transparente, eingefärbte LAS-Glaskeramik, bevorzugt die als färbende Komponenten 0,003 - 0,5 Gew.-% MoOs und/oder weniger als 0,2 Gew.-%

$Nd_2O_3$ und/oder weniger als 0,015 Gew.-% $V_2O_5$ enthält. Bevorzugt umfasst die Zusammensetzung, mehr bevorzugt besteht die Zusammensetzung der Glaskeramik aus, in Gew.-%:

| | |
|---|---|
| $Li_2O$ | 2,5 - 5,5; |
| $\Sigma$ $Na_2O$ + $K_2O$ | 0,1 - 4; |
| MgO | 0 - 3; |
| $\Sigma$ CaO + SrO + BaO | 0 - 5; |
| ZnO | 0 - 4; |
| $B_2O_3$ | 0 - 3; |
| $Al_2O_3$ | 16 - 26; |
| $SiO_2$ | 58 - 72; |
| $TiO_2$ | 1,5 - 5,5; |
| $ZrO_2$ | 0 - 2,5; |
| $SnO_2$ | 0,1 - 0,7; |
| $\Sigma$ $TiO_2$ + $ZrO_2$ + $SnO_2$ | 3 - 6,5; |
| $P_2O_5$ | 0 - 5; |
| $MoO_3$ | 0,003 - 0,5; |
| $Fe_2O_3$ | 0 - 0,25; |
| $V_2O_5$ | 0 - 0,015; |
| $Nd_2O_3$ | 0 - 0,02; |
| Zusätze | 0 - 2; und |

unvermeidbaren Verunreinigungen.

Das Glassubstrat enthält optional Zusätze wie chemischer Läutermittel, z.B. $As_2O_3$, $Sb_2O_3$, $CeO_2$, und/oder Läuterzusätze, z.B. Manganoxid, Sulfat-, Halogenid-Verbindungen (F, Cl, Br), in Gesamtgehalten bis zu 2,0 Gew.-%. Verbindungen einer Vielzahl von Elementen wie z. B. den Alkalien Rb, Cs oder Elementen wie Mn, Hf sind bei großtechnisch verwendeten Gemengerohstoffen übliche Verunreinigungen. Andere Verbindungen wie z.B. solche der Elemente W, Nb, Ta, Y, Seltene Erden, Bi, V, Cr, Ni können ebenfalls als Verunreinigung großtechnisch verwendeter Gemengerohstoffe, typischerweise im ppm-Bereich, enthalten sein. Aus Gründen des Umwelt- und des Arbeitsschutzes wird auf den Einsatz von giftigen oder bedenklichen Rohstoffen nach Möglichkeit verzichtet. Daher ist das Glassubstrat vorzugsweise frei von umweltschädlichen Stoffen, wie Arsen (As), Antimon (Sb), Cadmium (Cd), Blei (Pb), Caesium (Cs), Rubidium (Rb) Halogeniden und Schwefel (S), abgesehen von unver-meidbaren Verunreinigungen im Bereich von bevorzugt 0 bis kleiner 0,5 Gewichtsprozent, besonders bevorzugt kleiner 0,1 Gewichtsprozent, ganz besonders bevorzugt kleiner 0,05 Gewichtsprozent.

Allgemein können entweder natürlich vorkommende Rohstoffe oder chemisch aufbereitete beziehungsweise synthetisch hergestellte Rohstoffe für die Herstellung verwendet werden. Natürlich vorkommende Rohstoffe sind in der Regel kostengünstiger als äquivalente chemisch aufbereitete oder synthetisierte Rohstoffe. Die Verwendbarkeit natürlicher Rohstoffe ist allerdings durch die üblicherweise hohen Mengen an Verunreinigungen beschränkt. Beispiele für natürlich vorkommende Rohstoffe sind Quarzsand, Spodumen und Petalit. Chemisch aufbereitete oder synthetisch hergestellte Rohstoffe enthalten in der Regel nur sehr wenige Verunreinigungen. Beispiele für gebräuchliche aufbereitete oder synthetisierte Rohstoffe sind Lithiumcarbonat oder Titandioxidpulver. Die Obergrenze von Verunreinigungen durch typische Spurenelemente bei den verwendeten technischen Rohstoffen liegen üblicherweise bei 30 ppm Cl, 1 ppm CoO, 3 ppm $Cr_2O_3$, 200 ppm $Cs_2O$, 3 ppm CuO, 200 ppm F, 400 ppm $HfO_2$, 3 ppm NiO, 500 ppm $Rb_2O$, 5 ppm $V_2O_5$.

Schichtsystem

Das pigment-beschichtete Glassubstrat für ein Kochfeld umfasst ein Schichtsystem, umfassend eine Schicht A, enthaltend:

a) eine Matrix,
wobei die Matrix Silizium, Kohlenstoff und Sauerstoff enthält,
b) ein Pigment, bevorzugt ein organisches oder anorganisches Pigment, mehr bevorzugt ein Effektpigment, und
c) optional Graphit

wobei die Schicht A eine Bildkörnung von 35 % oder weniger aufweist.

Die Schicht A wird bevorzugt durch eine Farbpaste hergestellt, welche einen zumindest teilweise hydrolysierten Filmbildner (erste Komponente), Pigmente und gegebenenfalls Graphit und/oder Silikon enthält. Der Zeitpunkt der Zugabe von Pigmenten und gegebenenfalls Graphit und/oder Silikon kann prinzipiell frei gewählt werden. Jedoch erwies es sich als wirtschaftlicher, erst den Filmbildner, Wasser und ggf. Hydrolysekatalysator zu einem ersten Gemisch zu mischen, daraufhin den Filmbildner zumindest teilweise zu hydrolysieren, um eine erste Komponente zu erhalten; und dann anschließend dieser ersten Komponente Pigmente und gegebenenfalls Graphit und/oder Silikon zuzugeben, um eine Farbpaste zu erhalten, aus der dann die Schicht A gebildet wird.

Matrix

Gemäß der Erfindung enthält die Schicht A eine Matrix, die Silizium, Kohlenstoff und Sauerstoff enthält. Bevorzugt ist die Matrix eine Sol-Gel-Matrix. Die Sol-Gel-Matrix kann durch ein hierin beschriebenes Verfahren hergestellt werden. In bzw. durch die Matrix werden die Pigmente und optional Graphit gehalten.

Die Schicht A wird bevorzugt durch eine Farbpaste hergestellt (Details siehe Verfahren unten), dass ein oder mehrere zumindest teilweise hydrolysierte Filmbildner, Hydrolysekatalysator, Lösungsmittel, Pigmente und optional Silikon, Füllstoffe und Graphit umfasst. Bevorzugt wird zunächst eine erste Komponente hergestellt, indem ein oder mehrere Filmbildner, Hydrolysekatalysator, Lösungsmittel, Wasser, sowie optional Füllstoffe und Silikon gemischt werden, um ein erstes Gemisch zu erhalten. Dieses erste Gemisch wird eingeengt um eine erste Komponente zu erhalten und anschließend werden ein oder mehrere Pigmente, und optional Graphit, Silikon, Lösungsmittel, Füllstoffe zugegeben und anschließend vermischt, um die Farbpaste zu erhalten. Ebenso ist es möglich alle Bestandteile auf einmal zu mischen und dann das Gemisch einzuengen um die Farbpaste zu erhalten.

Ob die ausgehärtete Schicht A die vorgenannten Bestandteile enthält, hängt von den Siedepunkten bzw. der Zersetzungstemperatur der Bestandteile, sowie der Erwärmungstemperatur und der Dauer der Erwärmung (siehe Verfahren unten) der Farbpaste, ab.

Bevorzugt enthält die Schicht A nur Spuren (1 Gew.-% oder weniger, bevorzugt 0,1 Gew.-% oder weniger) an Lösungsmittel, mehr bevorzugt enthält die Schicht A und/oder B kein Lösungsmittel.

In einer bevorzugten Ausführungsform enthält die Matrix eines oder mehrere der folgenden Bindungsmotive:

i) $[OSiR^1R^2]$;
wobei $R^1$ und $R^2$ unabhängig ausgewählt sind aus einem organischen Rest mit 1 bis 20 Kohlenstoffatomen, -OH und -H, bevorzugt wobei $R^1$ und $R^2$ gleich sind;
ii) $[Si\text{-}O\text{-}Si]$; und
iii) $[O_3SiR^3]$;
wobei $R^3$ unabhängig ausgewählt ist aus einem organischen Rest mit 1 bis 20 Kohlenstoffatomen, -OH und -H. Dadurch ist eine gute Vernetzung sichergestellt.

Bevorzugte $R^1$ bis $R^3$ sind oben definiert.

Filmbildner

Als Filmbildner eignen sich Alkylsilicate wie z.B. Orthokieselsäure, Polykieselsäuren, Ester der Orthokieselsäure oder Ester von Polykieselsäuren optional mit einem oder mehreren organischen, nicht hydrolisierbaren Resten, die in organischen Lösungsmitteln löslich sind und mit Wasser zumindest teilweise hydrolysierbar sind. Die Hydrolyse kann durch einen Hydrolysekatalysator katalysiert werden (siehe unten). Durch die Reaktion des Filmbildners mit Wasser wird ein Sol hergestellt. Sole bilden nach ihrer Aushärtung eine feste Sol-Gel-Matrix, in der die Monomere (quer-)vernetzt sind. Die Aushärtung kann durch Erwärmen (z.B. 200 °C für 1 h) beschleunigt werden.

Bevorzugt wird die Schicht A aus einer Farbpaste hergestellt, der einen Filmbildner mit folgender Formel aufweist:

$$Si(OR^4)_x(OC{=}OR^5)_yR^6_{4\text{-}x\text{-}y},$$

wobei x, y und $R^4$ bis $R^6$ wie oben definiert sind.

Besonders geeignet Filmbildner sind in DE 043 38 360 A1 und EP 1 611 067 B1 beschrieben. Besonders bevorzugt sind die Filmbildner Methyltriethoxysilan und Tetraethoxysilan.

Die Schicht A wird bevorzugt durch eine Farbpaste hergestellt, welche 15 Gew.-% oder mehr, bevorzugt 20 Gew.-% oder mehr, mehr bevorzugt 25 Gew.-% oder mehr, mehr bevorzugt 30 Gew.-% oder mehr, mehr bevorzugt 32 Gew.-% oder mehr, mehr bevorzugt 35 Gew.-% oder mehr, mehr bevorzugt 40 Gew.-% oder mehr, mehr bevorzugt 45 Gew.-% oder mehr, mehr bevorzugt 50 Gew.-% oder mehr; und/oder, bevorzugt und, 80 Gew-% oder weniger, bevorzugt 75 Gew-% oder weniger, mehr bevorzugt 70 Gew-% oder weniger, mehr bevorzugt 65 Gew-% oder weniger, mehr bevorzugt 60 Gew-% oder weniger, mehr bevorzugt 55 Gew-% oder weniger, mehr bevorzugt 53 Gew-% oder weniger, mehr bevorzugt 50 Gew-% oder weniger, mehr bevorzugt 45 Gew-% oder weniger, mehr bevorzugt 40 Gew-% oder weniger; Filmbildner enthält. Ist in der Farbpaste viel Filmbildner enthalten, wird die Bearbeitbarkeit der Farbpaste verbessert und die Schichtdicke wird erhöht. Eine geringe Bildkörnung lässt sich bei einem geringen Gehalt besonders gut realisieren. Die Erfinder haben überraschenderweise herausgefunden, dass wenn die Farbpaste einen Anteil von 10 bis 60 Gew.-%, bevorzugt 15 bis 50 Gew.-%, mehr bevorzugt 18 bis 40 Gew.-%, mehr bevorzugt 20 bis 45 Gew.-%, mehr bevorzugt 25 bis 35 Gew.-%, Filmbildner enthält, eine sehr geringe Bildkörnung erreicht werden kann.

Silikon

Die Farbpaste enthält bevorzugt ein Silikon, mehr bevorzugt ein Silikonharz. Ein Silikonharz ist ein viskoses Silikon. Silikone unterscheiden sich von einem getrockneten Filmbildner in einer getrockneten Farbpaste in ihrer Beschaffenheit. Während eine getrocknete Farbpaste (= Beschichtung) fest ist, sind Silikone meist klare, farblose, neutrale, geruchsfreie, hydrophobe Flüssigkeiten.

Bevorzugt beträgt die Molekülmasse des Silikons 100 bis 250.000 g/mol, die Dichte 0,7 bis 1,1 g/cm$^3$ (25° C), und/oder die Viskosität 0,5 bis 1*10$^6$ mPa·s, bevorzugt 500 bis 10.000 mPa s, mehr bevorzugt 1.000 bis 8.000 mPa·s, bevorzugt 1.500 bis 5.000 mPa·s (25° C). Ein Silikonharz hat eine Viskosität von 2000 mPa·s (25° C) oder mehr.

Das Silikon kann ausgewählt sein aus einem cyclischen Polysiloxan, einem lineare Polysiloxan, einem (teilweise) vernetzte Polysiloxan und einem verzweigte Polysiloxane und Gemische davon. Bevorzugt ist das Silikon ein lineares Polysiloxan. Das Silikon kann mit verschiedenen Gruppen funktionalisiert sein, z.B. Methoxy, Ethoxy. Bevorzugt ist das Silikon ein Silikonepolyesterharz, mehr bevorzugt ein Ethoxy-funktionelles Silikon-Polyesterharz. Enthält das Silikon funktionelle Gruppen, die vernetzbar sind, kann die Kratzfestigkeit der Beschichtung erhöht werden. Daher ist die Schicht A bevorzugt durch eine Farbpaste herstellbar, die ein Silikon enthält, welches funktionelle Gruppen enthält, die vernetzbar sind, bevorzugt die bei 200 °C oder weniger vernetzbar sind.

Gemäß der Erfindung enthält die Farbpaste einen Anteil von 10 bis 60 Gew.-% Silikon. Zudem offenbart hierin ist, dass die Schicht A bevorzugt durch eine Farbpaste hergestellt wird, welche 0,4 Gew.-% oder mehr, bevorzugt 1 Gew.-% oder mehr, mehr bevorzugt 5 Gew.-% oder mehr, mehr bevorzugt 10 Gew.-% oder mehr, mehr bevorzugt 15 Gew.-% oder mehr, mehr bevorzugt 18 Gew.-% oder mehr, mehr bevorzugt 20 Gew.-% oder mehr, mehr bevorzugt 25 Gew.-% oder mehr, mehr bevorzugt 30 Gew.-% oder mehr, mehr bevorzugt 31 Gew.-% oder mehr, mehr bevorzugt 32 Gew.-% oder mehr, mehr bevorzugt 33 Gew.-% oder mehr, mehr bevorzugt 35 Gew.-% oder mehr, mehr bevorzugt 40 Gew.-% oder mehr, mehr bevorzugt 45 Gew.-% oder mehr, mehr bevorzugt 50 Gew.-% oder mehr; und/oder, bevorzugt und, 80 Gew-% oder weniger, bevorzugt 75 Gew-% oder weniger, mehr bevorzugt 70 Gew-% oder weniger, mehr bevorzugt 65 Gew-% oder weniger, mehr bevorzugt 60 Gew-% oder weniger, mehr bevorzugt 55 Gew-% oder weniger, mehr bevorzugt 53 Gew-% oder weniger, mehr bevorzugt 50 Gew-% oder weniger, mehr bevorzugt 45 Gew-% oder weniger, mehr bevorzugt 40 Gew-% oder weniger; mehr bevorzugt 35 Gew-% oder weniger; mehr bevorzugt 30 Gew-% oder weniger; mehr bevorzugt 20 Gew-% oder weniger; mehr bevorzugt 15 Gew-% oder weniger; mehr bevorzugt 10 Gew-% oder weniger; mehr bevorzugt 5 Gew-% oder weniger; Silikon enthält. Die Erfinder haben überraschenderweise herausgefunden, dass wenn die Farbpaste einen Anteil von 10 bis 60 Gew.-%, bevorzugt 15 bis 50 Gew.-%, mehr bevorzugt 18 bis 40 Gew.-%, mehr bevorzugt 20 bis 45 Gew.-%, mehr bevorzugt 25 bis 35 Gew.-%, Silikon enthält, eine sehr geringe Bildkörnung erreicht werden kann. Um eine relativ gute Kratzfestigkeit zu erhalten, ist ein Anteil von 50 Gew.-% oder weniger von Vorteil.

Die Erfinder haben zudem erkannt, dass das Verhältnis von Filmbildner und Silikon in der Farbpaste für die Bildkörnung eine wichtige Rolle spielt. Besonders geringe Werte für die Bildkörnung konnten erreicht werden, wenn das Verhältnis von Filmbildner zu Silikon, d.h. Filmbildner [Gew.-%] / Silikon [Gew.-%], einen Wert von 0,2 oder mehr, bevorzugt 0,3 oder mehr, mehr bevorzugt 0,4 oder mehr, mehr bevorzugt 0,42 oder mehr, mehr bevorzugt 0,44 oder mehr, mehr bevorzugt 0,46 oder mehr, mehr bevorzugt 0,48 oder mehr, mehr bevorzugt 0,5 oder mehr; und/oder, bevorzugt und; 0,8 oder weniger, bevorzugt 0,7 oder weniger, mehr bevorzugt 0,6 oder weniger, mehr bevorzugt 0,58 oder weniger, mehr bevorzugt 0,56 oder weniger, mehr bevorzugt 0,54 oder weniger, mehr bevorzugt 0,52 oder weniger, mehr bevorzugt 0,5 oder weniger, aufweist. Gemäß der Erfindung weist das Verhältnis von Filmbildner [Gew.-%] / Silikon [Gew.-%] einen Wert von 0,2 oder mehr und 0,8 oder weniger auf.

Hydrolysekatalysator

Die Schicht A wird bevorzugt durch eine Farbpaste hergestellt, welche einen Hydroly-sekatalysator enthält. Der Hydrolysekatalysator katalysiert die Hydrolyse des Filmbildners. Der Hydrolysekatalysator ist bevorzugt eine organische Säure oder Base, bevorzugt eine Säure, mehr bevorzugt eine Sulfonsäure, mehr bevorzugt p-Toluolsulfonsäure.

Die Schicht A wird bevorzugt durch eine Farbpaste hergestellt, welche 0,001 Gew.-% oder mehr, bevorzugt 0,01 Gew.-% oder mehr, mehr bevorzugt 0,1 Gew.-% oder mehr, mehr bevorzugt 0,5 Gew.-% oder mehr, mehr bevorzugt 1 Gew.-% oder mehr, mehr bevorzugt 2 Gew.-% oder mehr, mehr bevorzugt 5 Gew.-% oder mehr; und/oder, bevorzugt und, 10 Gew-% oder weniger, bevorzugt 6 Gew-% oder weniger, mehr bevorzugt 2 Gew-% oder weniger, mehr bevorzugt 0,2 Gew.-% oder weniger, mehr bevorzugt 0,02 Gew.-% oder weniger, mehr bevorzugt 0,002 Gew-% oder weniger; Hydrolysekatalysator enthält.

Lösungsmittel

Als Lösungsmittel eignen sich, insbesondere, um eine siebdruckfähige Farbpaste herzustellen, schwerflüchtige Lösungsmittel wie z.B. C3-C20 Glycolether, C4-C20 Alkohole, C7-C12 Alkane, C5-C20 Ether, z.B. Diethylenglycolmonomethylether, Butylcarbitolacetat, Terpineol, Methoxypropanol (VD = 38), Butylglycol (VD = 165) oder Butyldiglycol (VD > 1200); bevorzugt mit einer Verdunstungszahl (VD) über 35 und einem Siedepunkt über 120 °C ($VD_{Diethylether}$ = 1). Die schwerflüchtigen, hochsiedenden Lösungsmittel haben zum einen die Aufgabe, die Farbpaste im Sieb flüssig, d.h. verarbeitbar, zu halten. Zum anderen ist es wichtig, dass während der Verarbeitung die Konzentration in der Farbpaste konstant bleibt, damit reproduzierbare Schichtdicken und daraus resultierend eine konstante Transmission der Beschichtung erreicht werden können. Eine konstante Konzentration der Farbe während des Verarbeitungsprozesses kann nur mit ausreichenden Anteilen an schwerflüchtigen Lösungsmitteln in der Farbpaste erreicht werden, weil leichtflüchtige (VD < 10) oder mittelflüchtige (VD = 10 - 35) Lösungsmittel bereits während des Druckens der Farbpaste verdunsten würden und sich dadurch die Konzentration der Farbpaste unzulässig verändern würde.

Die Versuche zeigten aber auch, dass leichtflüchtige Lösungsmittel wie Ethanol (VD = 8,3) oder mittelflüchtige Lösungsmittel wie Butylacetat (VD = 11) in gewissen Mengen enthalten sein dürfen, ohne dass durch die Verdunstung des Lösungsmittels und die damit verbundene Erhöhung der Konzentration während des Siebdruckprozesses unzulässig hohe Transmissionsänderungen auftreten. Der Anteil an leichtflüchtigen Lösungsmitteln sollte insbesondere nicht höher sein als der Anteil an schwerflüchtigen Lösungsmitteln.

Die Schicht A wird bevorzugt durch eine Farbpaste hergestellt, welche 2 Gew.-% oder mehr, bevorzugt 4 Gew.-% oder mehr, mehr bevorzugt 8 Gew.-% oder mehr, mehr bevorzugt 12 Gew.-% oder mehr, mehr bevorzugt 16 Gew.-% oder mehr, mehr bevorzugt 20 Gew.-% oder mehr, mehr bevorzugt 25 Gew.-% oder mehr; und/oder, bevorzugt und, 30 Gew.-% oder weniger, bevorzugt 25 Gew.-% oder weniger, mehr bevorzugt 20 Gew.-% oder weniger, mehr bevorzugt 16 Gew.-% oder weniger, mehr bevorzugt 12 Gew.-% oder weniger, mehr bevorzugt 8 Gew.-% oder weniger; Lösungsmittel enthält. Eine Farbpaste, welche sehr gut verarbeitbar ist und zur Herstellung einer Beschichtung mit einer geringen Bildkörnung geeignet ist, enthält bevorzugt 10 bis 30 Gew.-%, bevorzugt 15 bis 25 Gew.-%, Lösungsmittel.

Füllstoffe

Füllstoffe, auch Additive genannt, sind zum Beispiel Verdickungs- und Thixotropiermittel, Entschäumer, Netz- und Verlaufsmittel.

Geeignete Verdickungs- und Thixotropiermittel, die den Farbton und die Transmission nicht verändern, sind z.B. Polyacrylate, pyrogene Kieselsäuren oder Cellulosederivate. Insbesondere Kieselsäuren sind zur Erhöhung der Viskosität geeignet (bei saurem Sol zersetzen sich Cellulosederivate und die Farbpaste wäre nur wenige Tage stabil). Der Anteil an Kieselsäure (bezogen auf die eingebrannte Schicht) sollte jedoch 15 Gew.-% nicht übersteigen, ideal ist der für Farbpaste ungewöhnlich hohe Anteil von 4 - 10 Gew.-%. Bei einem höheren Anteil als 15 Gew.-% Kieselsäure ist die Viskosität der Farbpaste zu hoch, so dass kein geschlossener Film mehr erhalten wird, d.h., in der Beschichtung treten kleine, unbeschichtete Bereiche auf. An diesen Stellen würden die Leuchtelemente unverhältnismäßig hell durch die Kochfläche scheinen, wodurch der ästhetische Eindruck gestört würde. Bei einem niedrigeren Anteil als 1 Gew.-% ist die Viskosität der Farbpaste zu gering, so dass die Farbpaste durch das Siebgewebe tropft.

Um das Druckbild zu optimieren, können der Farbpaste ferner Entschäumer, Netz- und Verlaufsmittel zugesetzt werden.

Die Schicht A wird bevorzugt durch eine Farbpaste hergestellt, welche 0,001 Gew.-% oder mehr, bevorzugt 0,1 Gew.-% oder mehr, mehr bevorzugt 0,2 Gew.-% oder mehr, mehr bevorzugt 0,3 Gew.-% oder mehr, mehr bevorzugt 0,4 Gew.-% oder mehr, mehr bevorzugt 0,5 Gew.-% oder mehr, mehr bevorzugt 0,6 Gew.-% oder mehr; und/oder, bevorzugt und, 15 Gew.-% oder weniger, mehr bevorzugt 10 Gew-% oder weniger, mehr bevorzugt 5 Gew-% oder weniger, mehr bevorzugt 1 Gew-% oder weniger, mehr bevorzugt 0,5 Gew.-% oder weniger, mehr bevorzugt 0,4 Gew-% oder weniger, mehr bevorzugt 0,3 Gew.-% oder weniger, mehr bevorzugt 0,2 Gew.-% oder weniger, mehr bevorzugt 0,1 Gew.-% oder weniger; Füllstoffe enthält. Eine Farbpaste, welche sehr gut verarbeitbar ist und eine geringe Bildkörnung aufweist, enthält bevorzugt 0,1 bis 0,5 Gew.-%, bevorzugt 0,2 bis 0,4 Gew.-%, Füllstoffe.

Pigment

Die Matrix an sich ist nach der Trocknung oder dem Einbrand nahezu farblos. Um die Transmission der Beschichtung zu erniedrigen und den gewünschten Effekt zu erreichen ist daher der Zusatz von Pigmenten notwendig. Die Art und Beschaffenheit der Pigmente können einen Einfluss auf die Bildkörnung haben. Geeignet sind Pigmente, die zumindest kurzzeitig (1 - 10 Minuten) bis 200 °C thermisch stabil sind. Höheren Temperaturen muss die Schicht A normalerweise nicht widerstehen, zum einen, weil die unter ihr angeordneten 7-Segment-Anzeigen oder LCD-Bildschirme höhere Temperaturen nicht zulassen und derartige Displaybereiche daher im Kaltbereich der Kochfläche vorgesehen werden, zum anderen, weil in der Nähe der Displaybereiche üblicherweise Berührungsschalter angeordnet werden und die Kochfläche in dem Bereich der Schalter kälter als 60 °C sein muss, damit sich der Benutzer bei der Bedienung der Kochfläche nicht die Finger verbrennt.

Neben den thermisch sehr stabilen anorganischen Pigmenten sind daher auch organische Pigmente geeignet. Die Pigmente sollten wegen der gesetzlichen Bestimmungen für Elektro- und Elektronikgeräte kein Blei, sechswertiges Chrom (insb. $Cr^{VI}$), Cadmium oder Quecksilber enthalten. Geeignet sind anorganische Buntpigmente und Schwarzpigmente wie Eisenoxidpigmente, Chromoxidpigmente oder oxidische Mischphasenpigmente mit Rutil- oder Spinellstruktur und anorganische Weißpigmente (Oxide, Carbonate, Sulfide). Als Beispiele für geeignete Pigmente seien die Eisenoxidrot-Pigmente aus Hämatit ($\alpha$-$Fe_2O_3$), Eisenoxidschwarz-Pigmente mit der ungefähren Zusammensetzung $Fe_3O_4$ sowie die Mischphasenpigmente Cobaltblau $CoAlO_4$, Zinkeisenbraun $(Zn,Fe)FeO_4$, Chromeisenbraun $(Fe,Cr)_2O_4$, Eisenmanganschwarz $(Fe,Mn)(Fe,Mn)_2O_4$, Spinellschwarz $Cu(Cr,Fe)_2O_4$ und auch Weißpigmente wie etwa $TiO_2$ und $ZrO_2$ genannt.

Um spezielle Effekte bei der Farbgebung zu erzielen, können auch anorganische Glanzpigmente (Metalleffektpigmente, Perlglanzpigmente und Interferenzpigmente) eingesetzt werden, sogenannte Effektpigmente. Als Effektpigmente sind plättchenförmige Teilchen aus Aluminium-, Kupfer- oder Kupfer-Zink-Legierungen geeignet.

Als organische Pigmente können Azopigmente (z.B. Naphthol AS, Dipyrazolon), polycyclische Pigmente (z.B. Chinacridon, Perylen) oder Metallkomplexpigmente (z.B. Kupferphthalocyanin-Pigmente) verwendet werden.

Die Größe und Form der Pigmente ist prinzipiell nicht besonders beschränkt. Der mittlere Teilchendurchmesser der Pigmente liegt bevorzugt im Bereich von 1 - 25 $\mu$m (bevorzugt bei 5 - 10 $\mu$m). D90 sollte unter 40 $\mu$m (bevorzugt bei 6 - 15 $\mu$m), D50 unter 25 $\mu$m (bevorzugt bei 6 - 8 $\mu$m) und D10 unter 12 $\mu$m (bevorzugt bei 2 - 5 $\mu$m) liegen. Plättchenförmige Pigmente sollten eine maximale Kantenlänge von 60 - 100 $\mu$m (bevorzugt 5 - 10 $\mu$m) haben, damit die Farbpaste mit den Siebgewebeweiten 140 - 31 (entsprechend einer Maschenweite von 36 $\mu$m) oder 100 - 40 (entsprechend einer Maschenweite von 57 $\mu$m) problemlos gedruckt werden kann und eine geringe Bild-körnung erreicht werden kann. Bei gröberen Pigmenten werden Schichten erhalten, die unhomogen wirken, so dass die Leuchtanzeige nicht mehr deutlich genug erkannt werden kann. Je feiner die Pigmente sind, umso homogener wirkt die Schicht und die Bildkörnung wird ebenfalls erniedrigt. Bei den genannten Korngrößen tritt üblicherweise eine Streuung von 5 - 40 % (Wellenlängenbereich: 400 - 800 nm) auf (s. EP 1 867 613 A1). Neben der Streuung kann die Form und Größe der Pigmente einen Einfluss auf die Bildkörnung haben.

Bei der Verwendung von Pigmenten mit Korngrößen unterhalb von 1 $\mu$m ist der oben genannte Effekt besonders ausgeprägt. Der Aufwand, der für die Dispergierung der Nanoteilchen und die Stabilisierung der Farbpaste erforderlich ist und die damit verbundenen Kosten stehen jedoch in keinem günstigen Verhältnis zu dem Gewinn an Anzeigequalität derart niedrigstreuender Schichten.

Die Schicht A wird bevorzugt durch eine Farbpaste hergestellt, welche 2 Gew.-% oder mehr, bevorzugt 4 Gew.-% oder mehr, mehr bevorzugt 8 Gew.-% oder mehr, mehr bevorzugt 12 Gew.-% oder mehr, mehr bevorzugt 16 Gew.-% oder mehr, mehr bevorzugt 20 Gew.-% oder mehr, mehr bevorzugt 25 Gew.-% oder mehr; und/oder, bevorzugt und, 45 Gew-% oder weniger, bevorzugt 30 Gew-% oder weniger, mehr bevorzugt 20 Gew-% oder weniger, mehr bevorzugt 16 Gew-% oder weniger, mehr bevorzugt 12 Gew-% oder weniger, mehr bevorzugt 8 Gew-% oder weniger; Pigment enthält. Bei einem zu niedrigeren Pigmentanteil ist die Transmission der Beschichtung zu hoch, so dass die Sicht in das Innere der Kochmulde nicht ausreichend verhindert wird. Bei einem zu hohen Pigmentanteil ist die Transmission der Beschichtung zu gering, so dass die Leuchtanzeigen nicht mehr ausreichend deutlich wahrgenommen werden können.

Schicht A kann zusätzlich neben einem Pigment auch einen Farbstoff enthalten. Bevorzugt enthält die Schicht A jedoch keine Farbstoffe, damit diese temperaturstabiler sind. Unter einer 7-Segement-Anzeige oder einem Display entstehen normalerweise keine sehr hohen Temperaturen während dem Betrieb. Jedoch wird die Farbpaste durch Erwärmen ausgehärtet, was zu einer Veränderung des Farbtons farbstoffhaltiger Schichten führen kann. Des Weiteren werden in Schicht A und Schicht B bevorzugt die gleichen Farbmittel verwendet und nachdem unter Schicht B üblicherweise die Kochplatten angeordnet sind, kann sich die Farbe der Schicht B, wenn sie einen Farbstoff enthält, mit der Zeit verändern. Daher enthält/enthalten die Schicht A, bevorzugt Schicht A und B keine Farbstoffe.

Graphit

Die Farbpaste, aus der die Schicht A hergestellt wird, enthält bevorzugt Graphit. Graphit dient zum Einstellen der Transmission der Schichten und dient gleichzeitig als Schmiermittel. Neben den Pigmenten, wird angenommen, dass ebenso Graphit einen hohen Einfluss auf die Bildkörnung hat.

Die Schicht A wird bevorzugt durch eine Farbpaste hergestellt, welche 0,01 Gew.-% oder mehr, bevorzugt 1 Gew.-% oder mehr, mehr bevorzugt 3 Gew.-% oder mehr, mehr bevorzugt 8 Gew.-% oder mehr, mehr bevorzugt 10 Gew.-% oder mehr, mehr bevorzugt 12 Gew.-% oder mehr, mehr bevorzugt 16 Gew.-% oder mehr, mehr bevorzugt 20 Gew.-% oder mehr, mehr bevorzugt 25 Gew.-% oder mehr; und/oder, bevorzugt und, 45 Gew-% oder weniger, bevorzugt 30 Gew-% oder weniger, mehr bevorzugt 20 Gew-% oder weniger, mehr bevorzugt 16 Gew-% oder weniger, mehr bevorzugt 12 Gew-% oder weniger, mehr bevorzugt 10 Gew-% oder weniger, mehr bevorzugt 8 Gew-% oder weniger; mehr bevorzugt 4 Gew-% oder weniger; Graphit enthält. Bei einem zu niedrigeren Graphitanteil ist die Transmission der Beschichtung zu hoch, so dass die Sicht in das Innere der Kochmulde nicht ausreichend verhindert wird. Bei einem zu hohen Graphitanteil ist die Transmission der Beschichtung zu gering, so dass die Leuchtanzeigen nicht mehr ausreichend deutlich wahrgenommen werden können. Zudem steigt mit zunehmenden Graphitanteil die elektrische Leitfähigkeit, was zu unerwünschten elektrischen Kontakten in der Elektronik führen kann.

Die Schicht A wird bevorzugt durch eine Farbpaste hergestellt, welche 0,01 Gew.-% oder mehr, bevorzugt 1 Gew.-% oder mehr, mehr bevorzugt 3 Gew.-% oder mehr, mehr bevorzugt 8 Gew.-% oder mehr, mehr bevorzugt 10 Gew.-% oder mehr, mehr bevorzugt 15 Gew.-% oder mehr, mehr bevorzugt 20 Gew.-% oder mehr, mehr bevorzugt 25 Gew.-% oder mehr, mehr bevorzugt 30 Gew.-% oder mehr, mehr bevorzugt 35 Gew.-% oder mehr; und/oder, bevorzugt und, 45 Gew-% oder weniger, bevorzugt 40 Gew-% oder weniger, mehr bevorzugt 35 Gew-% oder weniger, mehr bevorzugt 30 Gew-% oder weniger, mehr bevorzugt 25 Gew-% oder weniger, mehr bevorzugt 20 Gew-% oder weniger; Pigment und Graphit enthält. Bei einem zu niedrigeren Graphit- und Pigmentanteil ist die Transmission der Beschichtung zu hoch, so dass die Sicht in das Innere der Kochmulde nicht ausreichend verhindert wird. Bei einem zu hohen Graphit- und Pigmentanteil ist die Transmission der Beschichtung zu gering, so dass die Leuchtanzeigen nicht mehr ausreichend deutlich wahrgenommen werden können.

Zusammensetzung

Die Zusammensetzung der Schicht A besteht aus dem ausgehärteten Filmbildner, dem gegebenenfalls vernetzten Silikon, wobei der Hydrolysekatalysator und der/die unreagierte(n) Füllstoff(e) nahezu unverändert vorliegen. Das Lösungsmittel ist, wenn das Aushärten durch Erwärmen erfolgt überwiegend verdampft und es sind ggf. nur noch Spuren vorzufinden, bevorzugt nicht mehr vorhanden.

Nachdem bevorzugt etwa 20 Gew.-% Lösungsmittel in der Farbpaste zur Herstellung der Beschichtung enthalten ist und dieses überwiegend abdampft, können somit bevorzugte Bereiche des Filmbildners, des Silikons, des Hydrolysekatalysators, des Lösungsmittels und der Füllstoffe dadurch berechnet werden, indem die oben angegebenen Werte mit einem Faktor von etwa 1.2 multipliziert werden. Eine Differenzierung der einzelnen Bestandteile in der ausgehärteten Schicht erweist sich allerdings als schwierig.

Auch die Topfzeit der Farbpaste, aus der die Schicht A hergestellt wird, kann einen Einfluss auf die Bildkörnung haben. Wenn die Topfzeit 6 Monate oder weniger, bevorzugt 2 Monate oder weniger, mehr bevorzugt 1 Monat oder weniger, mehr bevorzugt 2 Wochen oder weniger, mehr bevorzugt 1 Woche oder weniger, mehr 1 Tag oder weniger beträgt, kann eine geringe Bildkörnung erreicht werden.

Die Kratzfestigkeit der Schicht A spielt eine geringe Rolle, da die Schicht bevorzugt auf die Seite der Glasplatte aufgetragen wird, die ins Innere des Kochfeldes gerichtet ist. Die Kratzfestigkeit ist jedoch bevorzugt 50 g oder mehr, mehr bevorzugt 75 g oder mehr, mehr bevorzugt 100 g oder mehr, mehr bevorzugt 200 g oder mehr.

Bildkörnung

Unter dem Begriff Bildkörnung wird die lokale Helligkeitsschwankung einer (durch-)leuchtenden Fläche mit einer Größe von 1 mm$^2$ verstanden. Der Effekt der Bildkörnung ähnelt der Körnung von Film in der Fotografie oder dem Bildrauschen in der Digitalfotografie.

Weist ein pigment-beschichtetes Glassubstrat eine geringe Bildkörnung auf, ist eine gute Sichtbarkeit der Anzeige oder des Displays möglich. Die Bildkörnung ist von der Streuung und Transmission vollständig unabhängig. Die Erfinder haben durch intensive Versuche herausgefunden, dass es sowohl möglich ist Schichten herzustellen, die eine geringe Bildkörnung, aber eine hohe Transmission und/oder Streuung, aufweisen; als auch Schichten herzustellen die eine hohe Bildkörnung aufweisen, aber ebenso eine hohe Transmission und/oder Streuung aufweisen. Ebenso ist es möglich Schichten herzustellen, die eine geringe Bildkörnung, und ebenso eine geringe Transmission und/oder Streuung, aufweisen; als auch Schichten herzustellen die eine hohe Bildkörnung aufweisen, aber eine geringe Transmission und/oder Streuung aufweisen.

Um eine sehr gute Sichtbarkeit der Anzeige oder des Displays zu erzielen, ist eine Bildkörnung von 35% oder weniger notwendig. Je geringer der Wert der Bildkörnung, desto besser sind darunterliegende Displays und Anzeigen erkennbar. Daher ist die Bildkörnung bevorzugt 34 % oder weniger, mehr bevorzugt 33 % oder weniger, mehr bevorzugt 32 % oder weniger, mehr bevorzugt 31 % oder weniger, mehr bevorzugt 30 % oder weniger, mehr bevorzugt 29 % oder weniger, mehr bevorzugt 28 % oder weniger, mehr bevorzugt 27 % oder weniger, mehr bevorzugt 26 % oder weniger, mehr bevorzugt 25 % oder weniger, mehr bevorzugt 24 % oder weniger, mehr bevorzugt 23 % oder weniger, mehr bevorzugt 22 % oder weniger, mehr bevorzugt 21 % oder weniger, mehr bevorzugt 20 % oder weniger, mehr bevorzugt 15 % oder weniger, mehr bevorzugt 10 % oder weniger.

Sehr geringe Werte lassen sich jedoch nur schwer realisieren und die Kosten, z.B. für sehr kleine Pigmente, steigen. Daher ist die Bildkörnung bevorzugt 5 % oder mehr, mehr bevorzugt 10 % oder mehr, mehr bevorzugt 12 % oder mehr, mehr bevorzugt 14 % oder mehr, mehr bevorzugt 16 % oder mehr, mehr bevorzugt 18 % oder mehr, mehr bevorzugt 20 % oder mehr, mehr bevorzugt 22 % oder mehr, mehr bevorzugt 24 % oder mehr, mehr bevorzugt 26 % oder mehr, mehr bevorzugt 28 % oder mehr, mehr bevorzugt 30 % oder mehr.

Ein Bereich der Bildkörnung, der kostengünstig realisierbar ist und Displays und/oder Anzeigen, das/die unter der pigment-beschichteten Glassubstrat liegt/liegen, sehr gut erkennen lassen, ist, wenn die Schicht A eine Bildkörnung von 10 bis 30 %, bevorzugt 15 bis 28 %, bevorzugt 17 bis 27 %, mehr bevorzugt 19 bis 25 % aufweist.

Lichttransmissionsgrad und Transmission bei 630 nm der Schicht A

Ist der Wert des Lichttransmissionsgrads oder der Transmission bei 630 nm der Schicht A zu gering, kann man das/die unter dem Glassubstrat liegende Display oder Anzeige nicht ausreichend erkennen. Ist der Wert zu hoch, ist die Anzeige auch im ausgeschalteten Zustand gut erkennbar und die pigment-beschichtete Glassubstrat weist einen unregelmäßigen Gesamteindruck auf.

Daher ist der Lichttransmissionsgrad der Schicht A bevorzugt 0,5 % oder mehr, bevorzugt 1 % oder mehr, mehr bevorzugt 2 % oder mehr, mehr bevorzugt 3 % oder mehr, mehr bevorzugt 4 % oder mehr, mehr bevorzugt 5 % oder mehr, mehr bevorzugt 6 % oder mehr; und/oder, bevorzugt und, 50 % oder weniger, bevorzugt 40 % oder weniger, mehr bevorzugt 30 % oder weniger, mehr bevorzugt 20 % oder weniger, mehr bevorzugt 15 % oder weniger, mehr bevorzugt 10 % oder weniger, mehr bevorzugt 8 % oder weniger, mehr bevorzugt 7 % oder weniger, mehr bevorzugt 6 % oder weniger, mehr bevorzugt 5 % oder weniger, mehr bevorzugt 4 % oder weniger, mehr bevorzugt 3 % oder weniger, mehr bevorzugt 2 % oder weniger.

Ebenso ist die Transmission bei 630 nm der Schicht A bevorzugt 0,5 % oder mehr, bevorzugt 1 % oder mehr, mehr bevorzugt 2 % oder mehr, mehr bevorzugt 3 % oder mehr, mehr bevorzugt 4 % oder mehr, mehr bevorzugt 5 % oder mehr, mehr bevorzugt 6 % oder mehr; und/oder, bevorzugt und, 50 % oder weniger, bevorzugt 40 % oder weniger, mehr bevorzugt 30 % oder weniger, mehr bevorzugt 20 % oder weniger, mehr bevorzugt 15 % oder weniger, mehr bevorzugt 12 % oder weniger, mehr bevorzugt 10 % oder weniger, mehr bevorzugt 9 % oder weniger, mehr bevorzugt 8 % oder weniger, mehr bevorzugt 7,5 % oder weniger, mehr bevorzugt 7,0 % oder weniger, mehr bevorzugt 6 % oder weniger, mehr bevorzugt 5 % oder weniger, mehr bevorzugt 4 % oder weniger, mehr bevorzugt 3 % oder weniger, mehr bevorzugt 2 % oder weniger.

Ein Wert, in dem die Anzeige im angeschalteten Zustand sehr gut zu erkennen ist, aber im ausgeschalteten kaum ist 1-8 %, bevorzugt 4-6 %.

Schicht B

Bevorzugt umfasst das Schichtsystem eine Schicht B, enthaltend:

a) eine Matrix,
wobei die Matrix Silizium, Kohlenstoff und Sauerstoff enthält; und
b) ein Pigment, vorzugsweise ein Effektpigment; und
c) optional Graphit;

wobei zumindest ein Bereich des Glassubstrats mit der Schicht B beschichtet ist und bevorzugt die Schicht A und die Schicht B zumindest teilweise überlappen; und
wobei die Schicht A und die Schicht B bevorzugt mindestens ein gleiches Pigment enthalten, wobei die Schicht A und die Schicht B mehr bevorzugt die gleichen Pigmente enthalten.

Bevorzugt weist der mit Schicht B beschichtete Bereich des Glassubstrats einen Lichttransmissionsgrad und/oder eine Transmission bei 630 nm auf, der/die niedriger ist als Schicht A und/oder kleiner als 5%, bevorzugt kleiner als 1%, mehr bevorzugt kleiner als 0,1% ist.

In einer bevorzugten Form wurde die Schicht A in eine Aussparung der Schicht B hineingedruckt. Dies bedeutet, dass in dem überlappenden Bereich bevorzugt die Schicht B zwischen Schicht A und dem Glassubstrat angeordnet ist.

Bevorzugt gelten alle hierin beschriebenen Einschränkungen und/oder bevorzugten Ausführungsformen der Schicht A auch für die Schicht B, wenn nicht anders angegeben.

Dimensionen

Die Fläche der Schicht A ist nicht besonders beschränkt. Die Schicht A ist bevorzugt 1 (beispielsweise 1 mm x 1 mm) mm$^2$ oder mehr, mehr bevorzugt 4 ( beispielsweise 2mm x 2 mm) - 30000 mm$^2$, mehr bevorzugt 10 - 15000 mm$^2$, mehr bevorzugt 15 - 500 mm$^2$, mehr bevorzugt 20 - 250 mm$^2$ groß. Ein Glassubstrat kann ein oder mehrere, z.B. 2 oder mehr, 3 oder mehr oder 4 oder mehr, Schichten A und/oder B, bevorzugt Schichten A, aufweisen.

Die Fläche der Schicht B ist nicht besonders beschränkt. Bevorzugt ist die Fläche der Schicht B 30 % oder mehr, bevorzugt 40% oder mehr, mehr bevorzugt 50 % oder mehr, mehr bevorzugt 60 % oder mehr, mehr bevorzugt 70 % oder mehr, mehr bevorzugt 80 % oder mehr, mehr bevorzugt 90 % oder mehr, mehr bevorzugt 95 % oder mehr, der Fläche von einer Seite des Glassubstrats.

Die Dicke der Schicht A ist nicht besonders beschränkt. Bevorzugt beträgt die Dicke der Schicht A gleich 1-15 $\mu$m, bevorzugt 2 -10 $\mu$m, mehr bevorzugt 4 bis 8 $\mu$m, mehr bevorzugt 5 bis 7 $\mu$m, mehr bevorzugt etwa 6 $\mu$m. Weist die Schicht A eine Dicke von 4 bis 8 $\mu$m, bevorzugt 5 bis 7 $\mu$m, mehr bevorzugt etwa 6 $\mu$m auf, lässt sich die Transparenz der Schicht sehr gut einstellen, während sehr geringe Werte für die Bild-körnung erreicht werden können.

In einer Ausführungsform weist die Schicht A in folgender Formel:

$$F = B/D,$$

wobei B die Bildkörnung der Schicht A in % ist und D die Dicke der Schicht A in $\mu$m ist;

einen Wert F [1/$\mu$m] von 8 oder weniger, bevorzugt 7 oder weniger, mehr bevorzugt 6 oder weniger, mehr bevorzugt 5 oder weniger, mehr bevorzugt 4 oder weniger, mehr bevorzugt 3 oder weniger, mehr bevorzugt 2 oder weniger; und/oder, bevorzugt und, 1 oder mehr, bevorzugt 2 oder mehr, mehr bevorzugt 3 oder mehr, mehr bevorzugt 4 oder mehr, mehr bevorzugt 5 oder mehr, mehr bevorzugt 6 oder mehr; auf. Ist der Wert zwischen 3 und 7, wird eine sehr kostengünstige Schicht mit einer geringen Bildkörnung erhalten, dessen Lichttransmissionsgrad sich sehr gut einstellen lässt.

Verfahren

Ein erfindungsgemäßes Verfahren ist ein Verfahren zur Herstellung eines pigment-beschichteten Glassubstrats, wobei eine Schicht A auf dem Glassubstrat durch die folgenden Schritte gebildet wird:

i) Herstellen einer ersten Komponente durch:

1) Mischen eines ersten Gemisches, enthaltend:

a) eine Verbindung der Formel Si(OR$^4$)$_x$(OC=OR$^5$)$_y$R$^6_{4-x-y}$,

wobei x+y gleich 1 bis 4 ist,
wobei R$^4$ bis R$^6$ unabhängig ausgewählt sind aus einem organischen Rest mit 1 bis 20 Kohlenstoffatomen, -OH und -H;

b) einem Hydrolysekatalysator;
c) Wasser; und
d) optional Silikon;

2) Einengen unter vermindertem Druck und gegebenenfalls erhöhter Temperatur des ersten Gemisches; und
3) optional Zugabe von Silikon;
um eine erste Komponente zu erhalten;

ii) Herstellen einer Farbpaste durch Mischen eines zweiten Gemisches, enthaltend:

a) die erste Komponente;
b) Pigment;
c) optional Graphit;
d) Lösungsmittel; und
e) Silikon; und

wobei die Farbpaste einen Anteil von 10 bis 60 Gew.-% Silikon enthält, und wobei das Verhältnis von Filmbildner [Gew.-%] / Silikon [Gew.-%] einen Wert von 0,2 oder mehr und 0,8 oder weniger aufweist, wobei der Filmbildner die folgende Formel aufweist:

$$Si(OR^4)_x(OC=OR^5)_yR^6{}_{4-x-y},$$

wobei x, y und $R^4$ bis $R^6$ wie oben definiert sind;

um eine Farbpaste zu erhalten;
iii) Auftragen der Farbpaste auf ein Glassubstrat; und
iv) Trocknen der aufgetragenen Farbpaste, um ein pigment-beschichtetes Glassubstrat zu erhalten.

Bevorzugt wird entweder der ersten Komponente und/oder der Farbpaste, bevorzugt der Farbpaste, Silikon zugegeben, mehr bevorzugt der Farbpaste 10 bis 60 Gew.-%, bevorzugt 15 bis 50 Gew.-%, mehr bevorzugt 18 bis 40 Gew.-%, mehr bevorzugt 20 bis 45 Gew.-%, mehr bevorzugt 25 bis 35 Gew.-%, Silikon zugegeben.

Das Lösungsmittel ist bevorzugt Diethylenglycolmonomethylether und/oder, bevorzugt und, der Hydrolysekatalysator ist bevorzugt Paratoluolsulfonsäure.

Die Farbpaste für Schicht A und/oder B kann unabhängig voneinander in den ausgesparten Bereich durch Sprühen, Tauchen, Gießen, Aufstreichen, Siebdrucken, Tampondruck oder andere Stempelverfahren aufgetragen werden. Das Siebdruckverfahren bietet den Vorteil, dass über die Gewebestärke die Dicke der Schicht genau definiert werden kann, so dass im Fertigungsprozess mit hoher Genauigkeit konstante Schichtdicken auch über weite, flächige Bereiche erzeugt werden können. Dieser Aspekt ist bei der Schicht A von besonderer Bedeutung, weil dadurch die Transmission für das Licht der Leuchtelemente definiert einstellbar ist und über die gesamte Schicht A konstant bleibt. Geeignete Schichtdicken nach dem Siebdruck, aber vor dem Aushärten, liegen im Bereich von 2 - 20 $\mu$m, bevorzugt bei 5 - 12 $\mu$m. Bei niedrigeren Schichtdicken als 2 $\mu$m ist die ausgehärtete Schicht A nicht mehr ausreichend blickdicht und ihre Kratzfestigkeit liegt unter 100 g. Bei Schichtdicken über 20 $\mu$m ist die Transmission der Schicht A für sichtbares Licht zu gering und Streueffekte nehmen stark zu, so dass die Leuchtanzeige nicht mehr deutlich genug erkannt werden kann. Auch können bei hohen Schichtdicken Haftfestigkeitsprobleme auftreten.

Geeignete Siebgewebeweiten zum Auftragen der Farbpaste auf ein Glassubstrat sind z.B. 140 - 31 (entsprechend einer Maschenweite von 36 $\mu$m) oder 100 - 40 (entsprechend einer Maschenweite von 57 $\mu$m).

Das Einengen des ersten Gemisches erfolgt bevorzugt bei 20 bis 100 °C und 50 bis 1000 mbar.

Das Trocknen der aufgetragenen Farbpaste erfolgt bevorzugt bei 50°C oder mehr, bevorzugt bei 100 °C oder mehr, mehr bevorzugt bei 150°C oder mehr, mehr bevorzugt bei 180 °C oder mehr und/oder, bevorzugt und, 500 °C oder weniger, mehr bevorzugt bei 300 °C oder weniger, mehr bevorzugt bei 220 °C oder weniger, und/oder bevorzugt für 10 min oder mehr, mehr bevorzugt bei 30 min oder mehr und/oder, bevorzugt und, 500 min oder weniger, bevorzugt 180 min oder weniger, mehr bevorzugt 60 min oder weniger.

Messverfahren

Im Folgenden werden die hierin verwendeten Messverfahren beschrieben:

Bildkörnung

Die Bildkörnung kann sowohl für emittierende Proben, als auch für transmittierende Proben bestimmt werden.

Zur Bestimmung der Bildkörnung wird mit einer Digitalkamera von einer Probe ein Schwarzweißfoto aufgenommen und an einem Computer ausgewertet. Jeder Pixel der Aufnahme entspricht dabei einem Grauwert zwischen 0 (schwarz) und 100 % (weiß).

Zur Auswertung wird innerhalb des leuchtenden Bereichs eine 1 x 1 mm$^2$ große Region von Interesse (Region of Interest, "ROI") definiert. Nur innerhalb der ROI liegende Pixel werden für die Berechnung der Bildkörnung verwendet. Von diesen Pixeln werden diejenigen Pixel nicht berücksichtigt, deren Messwerte den niedrigsten 10 % der gemessenen Werte und den höchsten 10 % der gemessenen Werte entsprechen. Dadurch werden Messartefakte wie Staubkörner auf der Oberfläche, Pinholes in eventuell vorhandenen Beschichtungen oder Hotspots in Leuchtmitteln aussortiert. Aus den verbleibenden Pixeln innerhalb der ROI werden der niedrigste Messwert $M_{min}$ und der höchste Messwert $M_{max}$ bestimmt und daraus wie folgt die Bildkörnung G berechnet:

$$G = (M_{max}-M_{min})/(M_{max}+M_{min}).$$

Sind der höchste und der niedrigste Messwert beispielsweise identisch, so ergibt sich eine Bildkörnung von 0 %. Ist der höchste Messwert beispielsweise doppelt so hoch wie der niedrigste, so ergibt sich eine Bildkörnung von ca. 33 %.

Wenn die Leuchtfläche eine ausreichende Größe aufweist, können innerhalb des leuchtenden Bereichs auch mehrere jeweils 1x1 mm$^2$ große ROIs definiert werden. Dann kann für jede ROI wie oben beschrieben die Bildkörnung bestimmt werden. Dies erlaubt es, den Mittelwert der Bildkörnung aus allen Einzelwerten der ROIs zu bilden und so die statistische Messgenauigkeit zu erhöhen.

Im Folgenden wird der Messaufbau und die Messmethode genauer beschrieben.

Der Messaufbau umfasst eine Dunkelkammer, in der zumindest die zu vermessende Probe, im Falle von transmittierenden Proben zusätzlich eine Lichtquelle sowie eine Digitalkamera angeordnet sind. Im Falle einer transmittierenden Probe, muss die Probe zwischen der Lichtquelle und der Digitalkamera angeordnet sein.

Die Dunkelkammer dient dazu, Fremdlicht auszuschließen und somit eine geeignete Belichtung der Aufnahme zu ermöglichen.

Leuchtflächen weisen häufig an ihrem Rand eine abfallende Helligkeit auf. Deshalb weist die zu vermessende Probe vorzugsweise eine Leuchtfläche auf, die groß genug ist, um darin ein Quadrat mit einer Kantenlänge von wenigstens 2 x 2 mm$^2$ zu legen. Dadurch wird es ermöglicht, die ROI so zu positionieren, dass die Messung der Bildkörnung wenig oder sogar gar nicht durch Randeffekte beeinflusst wird. Im Falle von transmittierenden Proben, weist vorzugsweise die Lichtquelle eine Leuchtfläche auf, die groß genug ist, um darin ein Quadrat mit einer Kantenlänge von wenigstens 2 x 2 mm$^2$ zu legen. Gleichzeitig muss die Leuchtfläche der Lichtquelle kleiner als die transmittierende Probe sein. Dadurch wird gewährleistet, dass die Probe die Leuchtfläche vollständig bedeckt. Wenn dies nicht der Fall ist, kann es beispielsweise zu einer Überbelichtung der Aufnahme oder einer Unterbelichtung der ROI kommen.

Im Falle von transmittierenden Proben, die eine einseitige Beschichtung aufweisen, ist die Beschichtung auf der der Lichtquelle zugewandten Seite angeordnet.

Die Lichtquelle für die Vermessung transmittierender Proben muss selbst eine Bild-körnung von weniger als 3 % aufweisen, damit sie das Messergebnis der Proben nicht störend beeinflusst. Dem Fachmann ist bekannt, wie er mit handelsüblichen Mitteln, insbesondere weißen LEDs und Diffusoren eine ausreichend homogene Leuchtfläche mit niedriger Bildkörnung aufbauen kann.

Als LEDs können beispielsweise eine oder mehrere kaltweiße LEDs mit einer Farbtemperatur von 6500 bis 8000 K, insbesondere mit 6500 K verwendet werden. Eine solche LED ist beispielsweise die LED der Firma Cree vom Typ XTEAWT-00-000000000HHE1 mit 6500 K und einem Farbwiedergabeindex von mindestens 80.

Zur Homogenisierung des Lichts bei niedriger Bildkörnung können geeignete Diffusoren, beispielsweise LEXAN Folie 8B28, Typ 82728, opal glatt/strukturiert, 250 $\mu$m zwischen der Lichtquelle und der Probe angeordnet werden. Bei Bedarf können zur Formung der Leuchtfläche Maskierungen zum Einsatz kommen. Dazu eignen sich beispielswiese lichtundurchlässige Platten oder Folien mit entsprechend geformtem, z.B. quadratischem, Ausschnitt in der erforderlichen Größe. Solche Maskierungen können beispielsweise aus Metall gefertigt werden.

Die Digitalkamera muss verschiedene Voraussetzungen erfüllen, um für die Durchführung der Messung geeignet zu sein.

Der Fachmann wird die Optik der Kamera anhand des in der Dunkelkammer zur Verfügung stehenden Raumangebots und der Größe und Anzahl der Pixel des Kamerasensors so auswählen, dass durch den Abbildungsmaßstab sichergestellt ist, dass die ROI mit einer Anzahl von mindestens 49 Pixeln abgebildet wird. Bei einer Abbildung mit weniger als 49 Pixeln kann es zu einer erhöhten Messungenauigkeit kommen. Eine Anzahl von mehr als 49 Pixeln ist nicht notwendig, aber vorteilhaft. Eine höhere Anzahl von Pixeln verbessert die Messgenauigkeit.

Beispielsweise kann eine Digitalkamera vom Typ acA1920 - 40 um der Basler AG mit einem Sony Pregius IMX249 CMOS-Sensor und einem Objektiv mit 35 mm Brennweite vom Typ LM35HC-SW der Firma Kowa GmbH verwendet werden.

Der Sony Pregius IMX249 Sensor ist ein Schwarzweiß-Sensor mit einer Pixelgröße von 5,86 x 5,86 $\mu$m$^2$ bei einer Auflösung von 1936 x 1216 Pixeln (2,35 MP) und einer Sensorgröße von ca. 11,3 x 7,1 mm$^2$. Bei einem Abbildungsmaßstab von 1:1 würde ein Objekt mit einer Länge von 1 mm auf ca. 170 Pixeln abgebildet. Ein ROI mit einer Fläche von 1 mm$^2$ würde entsprechend auf ca. 28.900 Pixeln abgebildet. Die Abbildung eines Objekts mit einer Länge von 1 mm auf 7 Pixeln (7 x 5,86 $\mu$m = 41,02 $\mu$m ~ 1/24 mm) würde einem Abbildungsmaßstab von ca. 1:24 entsprechen. Somit sollte bei diesem Sensor für die Abbildung einer ROI mit einer Fläche von $1 \times 1$ mm$^2$ auf wenigstens 49 Pixeln ein Abbildungsmaßstab von 1:24 oder mehr ausgewählt werden.

Das oben genannte Objektiv hat einen minimalen Fokusierabstand von 30 cm. Bei diesem Abstand beträgt der Abbildungsmaßstab laut Datenblatt 1:9. Diese Kombination aus Digitalkamera, Objektiv und Abstand zur Probe stellt also sicher, dass eine ROI mit $1 \times 1\ mm^2$ auf ca. 360 Pixeln und somit deutlich mehr als 49 Pixeln abgebildet wird.

Der Fokus der Digitalkamera ist für die Messung in jedem Fall so einzustellen, dass die zu vermessende Oberfläche der Probe so gut wie möglich in der Brennebene der Digitalkamera liegt. Bei transparenten Proben mit einseitiger Beschichtung ist der Fokus also in der Regel auf die Unterseite der beschichteten Probe einzustellen. Ein falsch eingestellter Fokus führt zu einer systematischen Unterschätzung des Wertes der Bildkörnung. Im Zweifelsfall kann die Messung mit mehreren unterschiedlichen Fokus-Einstellungen wiederholt werden. Der höchste gemessene Wert liegt dann dem tatsächlichen Wert der Bildkörnung am nächsten.

Die elektronische Signalverstärkung von Digitalkameras, beispielsweise einstellbar in Form von (Analog) Gain oder ISO-Werten, führt zu einem erhöhten Bildrauschen. Dieses Bildrauschen verfälscht den Bildkörnung-Wert systematisch hin zu höheren Werten. Deshalb muss die Digitalkamera bei der niedrigsten einstellbaren Signalverstärkung, vorzugsweise ohne Signalverstärkung, betrieben werden. Im Zweifelsfall ist die Signalverstärkung für die Messung so einzustellen, dass die Kamera für die Lichtquelle eine Bildkörnung von höchstens 3% misst.

Die Abbildung darf weder Über- noch Unterbelichtet sein. Eine Unterbelichtung führt zu einer Verfälschung des Ergebnisses, weil dann der Minimalwert $M_{min}$ nicht zuverlässig bestimmt werden kann. Eine Überbelichtung wirkt sich entsprechend auf den Maximalwert $M_{max}$ aus. Solange die Abbildung weder Über- noch Unterbelichtet ist, wirkt sich die Belichtung nicht auf das Messergebnis der Bildkörnung aus. Der Fachmann weiß, wie er beispielsweise mittels der Kamerablende, der Belichtungszeit, geeigneter optischer Filter vor der Kamera oder der Helligkeit der Lichtquelle die Belichtung passend einstellen kann.

Die aufgenommene Abbildung wird zur Bearbeitung an einen Computer übertragen. Das Speichern und Bearbeiten der Abbildung sollte vorzugsweise im RAW-Format erfolgen. Komprimierende Dateiformate wie JPEG können zu unerwünschten Messungenauigkeiten führen. Sie sollten deshalb nicht verwendet werden.

Die Auswertung der Abbildungen und die Berechnung der Bildkörnung kann am Computer mittels handelsüblicher Bildbearbeitungssoftware erfolgen. Geeignet sind beispielsweise Halcon SDK Industry 12 von MVTec Software GmbH oder MATLAB von MathWorks.

Lichttransmissionsgrad

Der Lichttransmissionsgrad wurde nach DIN EN 410 gemessen. Der Lichttransmissionsgrad hierin wurde in einem Bereich der Schicht A und/oder Schicht B gemessen, der nicht mit einer anderen Schicht überlappt.

Transmission bei 630 nm

Die Transmission bei 630 nm wurde mit einem Zangenphotometer ZPM-RGB der Firma Opsytec Dr. Gröbel GmbH gemessen.

Kratzfestigkeit

Die Messung der Kratzfestigkeit wurde durchgeführt, indem die mit dem jeweiligen Gewicht (50g, 100 g, 200 g, 300 g) belastete Hartmetallspitze (Wolframcarbid-Spitze; Spitzenradius: 0,5 mm) senkrecht auf die Beschichtung aufgesetzt und ca. 30 cm weit mit einer Geschwindigkeit von 20 - 30 cm/s über die Beschichtung geführt wurde (Universal scratch tester model 413, ERICHSEN). Die Bewertung erfolgte aus Sicht des Benutzers durch das Glassubstrat hindurch. Der Test gilt bei der gewählten Belastung als bestanden, wenn aus einem Abstand von 60 - 80 cm bei weißem Hintergrund und Tageslicht D65 kein Schaden erkennbar ist.

Zeichnungen

Figur 1     zeigt ein Kochfeld gemäß einer Ausführungsform der Erfindung.
Figur 2     zeigt einen Ausschnitt eines Kochfelds gemäß einer Ausführungsform der Erfindung im Querschnitt
Figur 3     Blockdiagramm des Verfahrens

Bezugszeichenliste

1    Kochfeld
2    Glassubstrat
3    7-Segment-Anzeige
4    Display
5    Markierung der Position der Kochplatten
6    Schicht A
7    Schicht B

Beschreibung der Zeichnungen

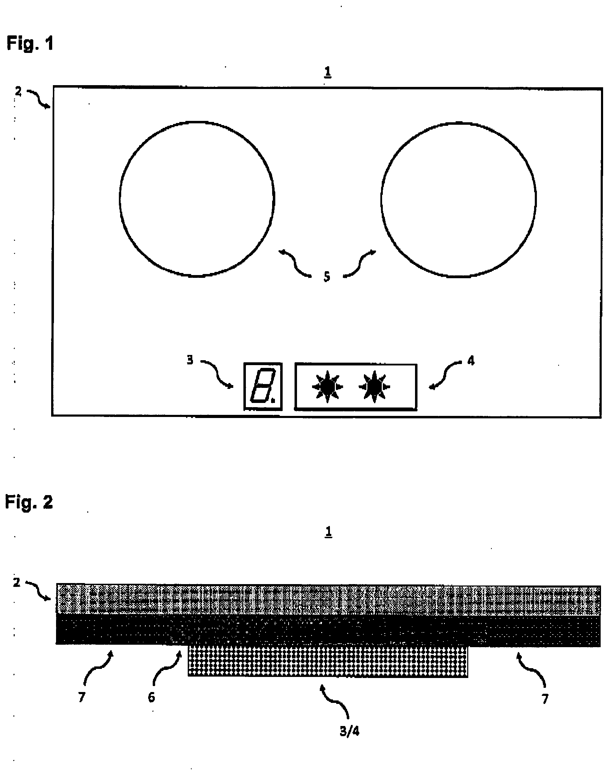

Figur 1 zeigt die Draufsicht eines Kochfelds 1 gemäß einer Ausführungsform der Erfindung. Das Glassubstrat 2 erstreckt sich flächig in der Papiereben. Die Glasplatte weist Markierungen 5 auf, die die Positionen der Kochplatten anzeigen. Diese Markierungen 5 können entweder auf oder unter dem Glassubstrat 2 angeordnet sein. Im unteren Bereich des Glassubstrats 2 sind exemplarisch eine 7-Segment-Anzeige 3 und ein Display 4 zu sehen, jedoch kann das Kochfeld 1 ebenso nur eine 7-Segment-Anzeige 3 oder ein Display 4 aufweisen, sowie mehrere 7-Segment-Anzeigen 3 und/oder mehrere Displays 4.

Figur 2 zeigt einen Ausschnitt eines Kochfelds 1 gemäß einer Ausführungsform der Erfindung im Querschnitt. Auf einer Seite des Glassubstrats 2 ist die Schicht A 6 angeordnet, die von einer Schicht B 7 umgeben ist. Die Schicht A 6 überlappt üblicherweise geringfügig mit der Schicht B 7 (nicht gezeigt), damit in der Draufsicht (siehe Fig. 1) keine Lücke zwischen Schicht A 6 und Schicht B 7 zu erkennen ist. Unter der Schicht A 6 ist eine 7-Segment-Anzeige 3 oder ein Display 4 angeordnet, welche entweder in direktem Kontakt mit der Schicht A 6 ist oder aber leicht beabstandet ist (nicht gezeigt).

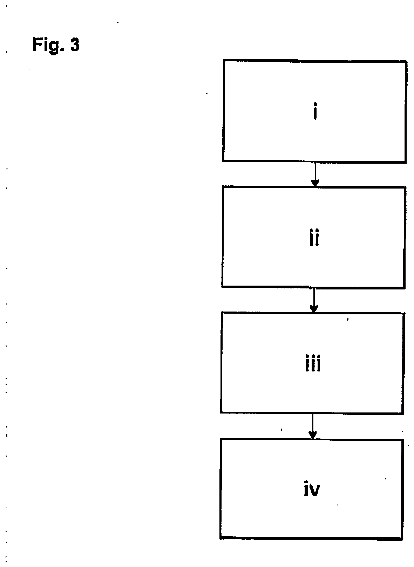

Figur 3 zeigt ein Blockdiagramm des Verfahrens. Das Verfahren dient zur Herstellung des pigment-beschichteten Glassubstrats. Zunächst wird eine erste Komponente hergestellt (i), daraufhin wird die Farbpaste hergestellt (ii). Anschließend wird die Farbpaste auf ein Glassubstrat aufgetragen (iii) und schließlich getrocknet (iv), um ein pigment-beschichtetes Glassubstrat zu erhalten.

Beispiele

Zur Herstellung der ersten Komponente wurde in einem Gefäß 40,01 Gew.-% MTEOS (Methyltriethoxysilan, Sigma Aldrich) mit 11,69 Gew.-% TEOS (Tetraethoxysilan, Sigma Aldrich) vorgelegt und mit 5,66 Gew.-% deionisiertem Wasser, in welchem 1,43 Gew.-% PTSH (Paratoluolsulfonsäure, Sigma Aldrich) gelöst wurden, für 30 min bei Raumtemperatur zur Reaktion gebracht. Zu diesem Gemisch wurden 32,97 Gew.-% Terpineol (Sigma Aldrich) und 8,24 Gew.-% n-Butylacetat (Sigma Aldrich) zugegeben und das entstandene Ethanol anschließend destillativ bei 200 mbar und 40 °C entfernt, um die erste Komponente zu erhalten.

Zu dieser ersten Komponente wurden die restlichen Substanzen gegeben (Mengenverhältnisse siehe Tabelle). Als Silikon wurde in jedem Beispiel 0,30 Gew.-% Polydimethylsiloxan (M 1000 von Carl Roth GmbH & Co. KG) verwendet und zudem wurde in den Beispielen 2 und 3 eine bestimmte Menge (siehe Tabelle) Ethoxy-funktionelles Silikon-Polyesterharz (Silikoftal HTT von Evonik) verwendet. Als Lösungsmittel wurde Diethylenglykolmonoethylether verwendet. Als Pigmente wurden 12,84 Gew.-% Iriodin 103 von Merck und 0,94 Gew.-% Iriodin 305 von Merck (= 13,78 Gew.-%) verwendet. Füllstoff war 2,18 Gew.-% pyrogene Kieselsäure (Aerosil A300 von Evonik). Als Graphit wurde Timrex SFG6 von TimCal verwendet. Die Substanzen wurden mit einem Mixer (IKA Labortechnik, Rührwerk RW 28 basic) für etwa 10 min gerührt, bis eine homogene Farbpaste erhalten wurde.

Anschließend wurde die Farbpaste innerhalb von 4 Stunden nach der Herstellung im Siebdruckverfahren (Siebstärke: 100-40) aufgetragen und anschließend bei 200°C für 45 min getrocknet.

| Beispiel | Erste Komponente | Silikon | Lösungsmittel | Pigmente | Graphit | Füllstoffe |
|---|---|---|---|---|---|---|
| # | Gew.-% | Gew.-% | Gew.-% | Gew.-% | Gew.-% | Gew.-% |
| 1* | 65,28 | 0,30 | 13,13 | 13,78 | 5,33 | 2,18 |
| 2° | 48,96 | 16,62 | 13,13 | 13,78 | 5,33 | 2,18 |
| 3° | 32,64 | 32,94 | 13,13 | 13,78 | 5,33 | 2,18 |

| Beispiel | Bildkörnung | Kratzfestigkeit | Transmission bei 630 nm |
|----------|-------------|-----------------|-------------------------|
| # | % | 9 | % |
| 1* | 39,7 | 200 | 9,0 |
| 2° | 31,7 | 500 | 7,0 |
| 3° | 25,2 | 400 | 7,5 |
| *Referenzbeispiel | | | |
| ° Beispiel gemäß der Erfindung | | | |

Aus der Tabelle ist ersichtlich, dass Beispiel 1 eine sehr hohe Bildkörnung (39,7 %) aufweist. Ausgehend von Beispiel 1 gibt es eine Vielzahl von denkbaren Möglichkeiten, um die Bildkörnung zu verringern. Eine Erhöhung eines Anteils einer Substanz innerhalb des Gemisches bedingt zugleich die Verringerung des prozentualen Anteils einer anderen Substanz. Die Erfinder haben durch intensive Versuche herausgefunden, dass überraschenderweise die Zugabe von einem Silikon zu dem Gemisch und gleichzeitig das Verringern des Anteils des Filmbildners, während alle anderen Anteile der Substanzen gleichbleiben, zu einer Verringerung der Bildkörnung führt. Der Gesamteindruck der Schicht wird durch die Zugabe von Silikon nur geringfügig beeinflusst. So konnte mit einem Gemisch, dass 48,96 Gew.-% Filmbildner und 16,32 Gew.-% Silikon enthielt, eine Schicht erhalten werden, die eine Bildkörnung von 31,7 % aufwies. Eine Erhöhung des Silikonanteils auf 32,64 Gew.-% und eine weitere Verringerung des Filmbildners auf ebenfalls 32,64 Gew.-% in dem Gemisch führte dazu, dass in der erhaltenen Schicht eine Bildkörnung von 25,2 gemessen werden konnte.

**Patentansprüche**

1. Ein pigment-beschichtetes Glassubstrat für ein Kochfeld, umfassend:

   i) ein Glassubstrat,
   wobei das Glassubstrat ein Glas oder eine Glaskeramik umfasst, bevorzugt aus einem Glas oder einer Glaskeramik besteht; und
   ii) ein Schichtsystem, umfassend:

   eine Schicht A, enthaltend:

   a) eine Matrix,
   wobei die Matrix Silizium, Kohlenstoff und Sauerstoff enthält,
   b) ein Pigment, bevorzugt ein organisches oder anorganisches Pigment, mehr bevorzugt ein Effektpigment, und
   c) optional Graphit

   wobei die Schicht A eine Bildkörnung von 35 % oder weniger aufweist; und wobei das pigment-beschichtete Glassubstrat durch ein Verfahren erhältlich ist, wobei die Schicht A auf dem Glassubstrat durch die folgenden Schritte gebildet wird:

   i) Herstellen einer ersten Komponente durch:

   1) Mischen eines ersten Gemisches, enthaltend:

   a) eine Verbindung der Formel $Si(OR^4)_x(OC{=}OR^5)_yR^6_{4-x-y}$,

   wobei x+y gleich 1 bis 4 ist,
   wobei $R^4$ bis $R^6$ unabhängig ausgewählt sind aus einem organischen Rest mit 1 bis 20 Kohlenstoffatomen, -OH und -H;

   b) einem Hydrolysekatalysator;
   c) Wasser; und
   d) optional Silikon;

2) Einengen unter vermindertem Druck und gegebenenfalls erhöhter Temperatur des ersten Gemisches; und

3) optional Zugabe von Silikon;

um eine erste Komponente zu erhalten;

ii) Herstellen einer Farbpaste durch Mischen eines zweiten Gemisches, enthaltend:

a) die erste Komponente;
b) Pigment;
c) optional Graphit;
d) Lösungsmittel; und
e) Silikon;

um eine Farbpaste zu erhalten; und

wobei die Farbpaste einen Anteil von 10 bis 60 Gew.-% Silikon enthält, und wobei das Verhältnis von Filmbildner [Gew.-%] / Silikon [Gew.-%] einen Wert von 0,2 oder mehr und 0,8 oder weniger aufweist, wobei der Filmbildner die folgende Formel aufweist:

$$Si(OR^4)_x(OC=OR^5)_yR^6_{4-x-y},$$

wobei x, y und $R^4$ bis $R^6$ wie oben definiert sind;

iii) Auftragen der Farbpaste auf ein Glassubstrat; und
iv) Trocknen der aufgetragenen Farbpaste, um ein pigment-beschichtetes Glassubstrat zu erhalten.

2. Das beschichtete Glassubstrat gemäß Anspruch 1, wobei die Schicht A eine Bild-körnung von 10 bis 30%, bevorzugt 15 bis 28 %, bevorzugt 17 bis 27 %, mehr bevorzugt 19 bis 25 % aufweist.

3. Das beschichtete Glassubstrat gemäß irgendeinem der vorherigen Ansprüche, wobei die Schicht A einen Lichttransmissionsgrad von 1-5 %, bevorzugt 2-4 % aufweist; und/oder wobei die Schicht A eine Transmission bei 630 nm von 1-10 %, bevorzugt 5-8 % aufweist.

4. Das beschichtete Glassubstrat gemäß irgendeinem der vorherigen Ansprüche, wobei das Schichtsystem eine Schicht B umfasst, enthaltend:

a) eine Matrix,
wobei die Matrix Silizium, Kohlenstoff und Sauerstoff enthält; und
b) ein Pigment, vorzugsweise ein Effektpigment; und
c) optional Graphit;
wobei zumindest ein Bereich des Glassubstrats mit der Schicht B beschichtet ist und bevorzugt die Schicht A und die Schicht B zumindest teilweise überlappen; und
wobei die Schicht A und die Schicht B bevorzugt mindestens ein gleiches Pigment enthalten, wobei die Schicht A und die Schicht B mehr bevorzugt die gleichen Pigmente enthalten.

5. Das beschichtete Glassubstrat gemäß irgendeinem der vorherigen Ansprüche, wobei der mit Schicht B beschichtete Bereich des Glassubstrats einen Lichttransmissions-grad aufweist, der niedriger ist als der von Schicht A und/oder kleiner als 5%, bevorzugt kleiner als 1%, mehr bevorzugt kleiner als 0,1% ist.

6. Das beschichtete Glassubstrat gemäß irgendeinem der vorherigen Ansprüche, wobei die Dicke der Schicht A und/oder der Schicht B 1- 15 $\mu$m, bevorzugt 2 -10 $\mu$m, mehr bevorzugt 4 bis 8 $\mu$m, mehr bevorzugt 5 bis 7 $\mu$m, mehr bevorzugt etwa 6 $\mu$m beträgt.

7. Das beschichtete Glassubstrat gemäß irgendeinem der vorherigen Ansprüche, wobei das Pigment Al, Si, Cr, Fe, Cu, Mn, Co, oder Ti, bevorzugt Al, Si, Cr, Fe, Cu, Mn oder Co enthält; und/oder

wobei die Schicht A und/oder B Graphit, bevorzugt 0.01 bis 12 Gew.-%, bevorzugt 1 bis 10 Gew.-%, mehr bevorzugt 3 bis 8 Gew.-% Graphit, enthält; und/oder

wobei die Schicht A, bevorzugt Schicht A und Schicht B, keine Farbstoffe enthält /enthalten.

8. Das beschichtete Glassubstrat gemäß irgendeinem der vorherigen Ansprüche, wobei die Schicht A und/oder B 0,4 Gew.-% oder mehr, bevorzugt 0,4 bis 60 Gew.-%, mehr bevorzugt 1 bis 60 Gew.-%, mehr bevorzugt 15 bis 50 Gew.-%, mehr bevorzugt 18 bis 40 Gew.-%, mehr bevorzugt 20 bis 45 Gew.-%, mehr bevorzugt 25 bis 35 Gew.-%, Silikon, bevorzugt funktionalisiertes Silikon, mehr bevorzugt funktionalisiertes Silikonharz umfasst, bevorzugt wobei das funktionalisierte Silikon, bevorzugt das funktionalisierte Silikonharz, vernetzt vorliegt.

9. Das beschichtete Glassubstrat gemäß irgendeinem der vorherigen Ansprüche, wobei die Matrix eines oder mehrere der folgenden Bindungsmotive enthält:

i) $[OSiR^1R^2]$;
wobei $R^1$ und $R^2$ unabhängig ausgewählt ist aus einem organischen Rest mit 1 bis 20 Kohlenstoffatomen, -OH und -H, bevorzugt wobei $R^1$ und $R^2$ gleich sind;
ii) [Si-O-Si]; und
iii) $[O_3SiR^3]$;
wobei $R^3$ unabhängig ausgewählt ist aus einem organischen Rest mit 1 bis 20 Kohlenstoffatomen, -OH und -H.

10. Das beschichtete Glassubstrat gemäß irgendeinem der vorherigen Ansprüche, wobei der Farbpaste 15 bis 50 Gew.-%, bevorzugt 18 bis 40 Gew.-%, mehr bevorzugt 20 bis 45 Gew.-%, mehr bevorzugt 25 bis 35 Gew.-%, Silikon zugegeben wird.

11. Das beschichtete Glassubstrat gemäß irgendeinem der vorherigen Ansprüche, wobei der ersten Komponente Silikon zugegeben wird.

12. Das beschichtete Glassubstrat gemäß irgendeinem der vorherigen Ansprüche, wobei das Lösungsmittel Diethylenglycolmonomethylether ist; und/oder

wobei der Hydrolysekatalysator Paratoluolsulfonsäure ist; und/oder
wobei das Silikon ein funktionalisiertes Silikon, bevorzugt ein Ethoxy-funktionelles Silikon, mehr bevorzugt ein Ethoxy-funktionelles Silikon-Polyesterharz, ist.

13. Das beschichtete Glassubstrat gemäß irgendeinem der vorherigen Ansprüche, wobei $R^1$ bis $R^6$ unabhängig ausgewählt ist aus einer Liste bestehend aus substituiertem oder unsubstituiertem und/oder linearem oder verzweigtem Alkyl, Heteroalkyl, Cycloalkyl, Alkyl-Cycloalkyl, Heteroalkyl-Cycloalkyl, Heterocycloalkyl, Alkyl-Heterocycloalkyl, Heteroalkyl-Heterocycloalkyl, Aryl, Alkyl-Aryl, Heteroalkyl-Aryl, Heteroaryl, Alkyl-Heteroaryl, Heteroalkyl-Heteroaryl, -OH und H;

bevorzugt jeweils unsubstituiertes Alkyl, Heteroalkyl und Alkyl-Cycloalkyl, Alkyl-Cycloalkyl, Heteroalkyl-Cycloalkyl, Heterocycloalkyl, Alkyl-Heterocycloalkyl und Heteroalkyl-Heterocycloalkyl;
mehr bevorzugt Methyl und Ethyl; und/oder
wobei x+y gleich 3 oder 4 ist, bevorzugt x gleich 3 oder 4 ist und y gleich 0 oder 1 ist.

14. Verfahren zur Herstellung eines pigment-beschichteten Glassubstrats, wobei die Schicht A auf dem Glassubstrat durch die folgenden Schritte gebildet wird:

i) Herstellen einer ersten Komponente durch:

1) Mischen eines ersten Gemisches, enthaltend:

a) eine Verbindung der Formel $Si(OR^4)_x(OC=OR^5)_yR^6_{4-x-y}$,

wobei x+y gleich 1 bis 4 ist,
wobei $R^4$ bis $R^6$ unabhängig ausgewählt sind aus einem organischen Rest mit 1 bis 20 Kohlenstoffatomen, -OH und -H;

b) einem Hydrolysekatalysator;
c) Wasser; und

d) optional Silikon;

2) Einengen unter vermindertem Druck und gegebenenfalls erhöhter Temperatur des ersten Gemisches; und

3) optional Zugabe von Silikon;

um eine erste Komponente zu erhalten;
ii) Herstellen einer Farbpaste durch Mischen eines zweiten Gemisches, enthaltend:

a) die erste Komponente;
b) Pigment;
c) optional Graphit;
d) Lösungsmittel; und
e) Silikon;

um eine Farbpaste zu erhalten; und

wobei die Farbpaste einen Anteil von 10 bis 60 Gew.-% Silikon enthält, und wobei das Verhältnis von Filmbildner [Gew.-%] / Silikon [Gew.-%] einen Wert von 0,2 oder mehr und 0,8 oder weniger aufweist, wobei der Filmbildner die folgende Formel aufweist:

$$Si(OR^4)_x(OC=OR^5)_yR^6_{4-x-y},$$

wobei x, y und $R^4$ bis $R^6$ wie oben definiert sind;

iii) Auftragen der Farbpaste auf ein Glassubstrat; und
iv) Trocknen der aufgetragenen Farbpaste, um ein pigment-beschichtetes Glassubstrat zu erhalten.

15. Ein Kochfeld, ein Backofen, eine Kaminsichtscheibe oder eine Mikrowelle, bevorzugt ein Kochfeld, mehr bevorzugt ein Kochfeld, das eine 7-Segment-Anzeige oder ein Display enthält, umfassend ein pigment-beschichteten Glassubstrat gemäß irgendeinem der Ansprüche 1 bis 13.

**Claims**

1. A pigment-coated glass substrate for a cooktop, comprising:

i) a glass substrate,
wherein the glass substrate comprises a glass or a glass-ceramic, preferably consists of a glass or a glass-ceramic; and
ii) a layer system comprising:

a layer A containing:

a) a matrix,
wherein the matrix contains silicon, carbon and oxygen,
b) a pigment, preferably an organic or inorganic pigment, more preferably an effect pigment, and
c) optionally graphite,

wherein layer A has image graining of 35% or less; and

wherein the pigment-coated glass substrate is obtainable by a method wherein layer A is formed on the glass substrate by the following steps:

i) producing a first component by:

1) mixing a first mixture comprising:

a) a compound of the formula

$$Si(OR^4)_x(OC=OR^5)_yR^6_{4-x-y}$$

where x + y is 1 to 4,
where $R^4$ to $R^6$ are independently selected from an organic radical having 1 to 20 carbon atoms, -OH and -H;

b) a hydrolysis catalyst;
c) water; and
d) optionally silicone;

2) concentrating under reduced pressure and optionally elevated temperature of the first mixture; and
3) optionally adding silicone;

in order to obtain a first component;
ii) producing a colour paste by mixing a second mixture comprising:

a) the first component;
b) pigment;
c) optionally graphite;
d) solvent; and
e) silicone;

in order to obtain a colour paste; and

wherein the colour paste contains a proportion of 10% to 60% by weight of silicone, and wherein the ratio of film former [wt%]/silicone [wt%] has a value of 0.2 or more and 0.8 or less,
wherein the film former has the following formula:

$$Si(OR^4)_x(OC=OR^5)_yR^6_{4-x-y}$$

where x, y and $R^4$ to $R^6$ are as defined above;

iii) applying the colour paste to a glass substrate; and
iv) drying the colour paste applied in order to obtain a pigment-coated glass substrate.

2. The coated glass substrate according to Claim 1, wherein layer A has image graining of 10% to 30%, preferably 15% to 28%, preferably 17% to 27%, more preferably 19% to 25%.

3. The coated glass substrate according to any of the preceding claims, wherein layer A has transmittance of 1-5%, preferably 2-4%; and/or wherein layer A has transmittance at 630 nm of 1-10%, preferably 5-8%.

4. The coated glass substrate according to any of the preceding claims, wherein the layer system comprises a layer B containing:

a) a matrix,
wherein the matrix contains silicon, carbon and oxygen; and
b) a pigment, preferably an effect pigment; and
c) optionally graphite;
wherein at least a region of the glass substrate has been coated with layer B, and layer A and layer B preferably overlap at least partly; and
wherein layer A and layer B preferably contain at least one identical pigment, where layer A and layer B more preferably contain the same pigments.

5. The coated glass substrate according to any of the preceding claims, wherein the region of the glass substrate coated with layer B has transmittance less than that of layer A and/or less than 5%, preferably less than 1%, more preferably less than 0.1%.

**6.** The coated glass substrate according to any of the preceding claims, wherein the thickness of layer A and/or layer B is 1-15 pm, preferably 2-10 pm, more preferably 4 to 8 $\mu$m, more preferably 5 to 7 $\mu$m, more preferably about 6 $\mu$m.

**7.** The coated glass substrate according to any of the preceding claims, wherein the pigment contains Al, Si, Cr, Fe, Cu, Mn, Co or Ti, preferably Al, Si, Cr, Fe, Cu, Mn or Co; and/or

wherein layer A and/or B contains graphite, preferably 0.01% to 12% by weight, preferably 1% to 10% by weight, more preferably 3% to 8% by weight, of graphite; and/or
wherein layer A, preferably layer A and layer B, do(es) not contain any dyes.

**8.** The coated glass substrate according to any of the preceding claims, wherein layer A and/or B comprises 0.4% by weight or more, preferably 0.4% to 60% by weight, more preferably 1% to 60% by weight, more preferably 15% to 50% by weight, more preferably 180 to 40% by weight, more preferably 20% to 45% by weight, more preferably 25% to 35% by weight, of silicone, preferably functionalized silicone, more preferably functionalized silicone resin, preferably wherein the functionalized silicone, preferably the functionalized silicone resin, is in crosslinked form.

**9.** The coated glass substrate according to any of the preceding claims, wherein the matrix contains one or more of the following binding motifs:

i) $[OSiR^1R^2]$;
where $R^1$ and $R^2$ is independently selected from an organic radical having 1 to 20 carbon atoms, -OH and -H, preferably where $R^1$ and $R^2$ are the same;
ii) [Si-O-Si]; and
iii) $[O_3SiR^3]$;

where $R^3$ is independently selected from an organic radical having 1 to 20 carbon atoms, -OH and -H.

**10.** The coated glass substrate according to any of the preceding claims, wherein 15% to 50% by weight, preferably 18% to 40% by weight, more preferably 20% to 45% by weight, more preferably 25% to 35% by weight, of silicone is added to the colour paste.

**11.** The coated glass substrate according to any of the preceding claims, wherein silicone is added to the first component.

**12.** The coated glass substrate according to any of the preceding claims, wherein the solvent is diethylene glycol monomethyl ether; and/or

wherein the hydrolysis catalyst is paratoluenesulfonic acid; and/or
wherein the silicone is a functionalized silicone, preferably an ethoxy-functional silicone, more preferably an ethoxy-functional silicone polyester resin.

**13.** The coated glass substrate according to any of the preceding claims, wherein $R^1$ to $R^6$ is independently selected from a list consisting of substituted or unsubstituted and/or linear or branched alkyl, heteroalkyl, cycloalkyl, alkylcycloalkyl, heteroalkylcycloalkyl, heterocycloalkyl, alkyl-heterocycloalkyl, heteroalkylheterocycloalkyl, aryl, alkylaryl, heteroalkylaryl, heteroaryl, alkyl-heteroaryl, heteroalkylheteroaryl, -OH and H;

preferably respectively unsubstituted alkyl, heteroalkyl and alkylcycloalkyl, alkylcycloalkyl, heteroalkylcycloalkyl, heterocycloalkyl, alkyl-heterocycloalkyl and heteroalkylheterocycloalkyl; more preferably methyl and ethyl; and/or
where x + y is 3 or 4, preferably x is 3 or 4 and y is 0 or 1.

**14.** Process for producing a pigment-coated glass substrate, wherein layer A on the glass substrate is formed by the following steps:

i) producing a first component by:

1) mixing a first mixture comprising:

a) a compound of the formula

$$Si(OR^4)_x(OC=OR^5)_yR^6_{4-x-y}$$

where x + y is 1 to 4,
where $R^4$ to $R^6$ are independently selected from an organic radical having 1 to 20 carbon atoms, -OH and -H;

b) a hydrolysis catalyst;
c) water; and
d) optionally silicone;

2) concentrating under reduced pressure and optionally elevated temperature of the first mixture; and
3) optionally adding silicone;

in order to obtain a first component;
ii) producing a colour paste by mixing a second mixture comprising:

a) the first component;
b) pigment;
c) optionally graphite;
d) solvent; and
e) silicone;

in order to obtain a colour paste; and

wherein the colour paste contains a proportion of 10% to 60% by weight of silicone, and
wherein the ratio of film former [wt%]/silicone [wt%] has a value of 0.2 or more and 0.8 or less,
wherein the film former has the following formula:

$$Si(OR^4)_x(OC=OR^5)_yR^6_{4-x-y}$$

where x, y and $R^4$ to $R^6$ are as defined above;

iii) applying the colour paste to a glass substrate; and
iv) drying the colour paste applied in order to obtain a pigment-coated glass substrate.

15. A cooktop, a baking oven, a stove sightglass or a microwave, preferably a cooktop, more preferably a cooktop containing a 7-segment display or another kind of display, comprising a pigment-coated glass substrate according to any of Claims 1 to 13.

**Revendications**

1. Substrat en verre revêtu de pigment destiné à une plaque de cuisson, comprenant :

i) un substrat en verre,
le substrat en verre comprenant un verre ou une vitrocéramique, de préférence étant constitué par un verre ou une vitrocéramique ; et
ii) un système stratifié, comprenant :

une couche A, contenant :

a) une matrice,
la matrice contenant du silicium, du carbone et de l'oxygène,
b) un pigment, de préférence un pigment organique ou inorganique, plus préférablement un pigment conférant un effet, et

c) éventuellement du graphite

la couche A présentant un grain de 35% ou moins ; et
le substrat en verre revêtu de pigment pouvant être obtenu par un procédé dans lequel la couche A est formée sur le substrat en verre par les étapes suivantes :

i) préparation d'un premier composant par :

1) mélange d'un premier mélange, contenant :

a) un composé de formule $Si\,(OR^4)_x(OC=OR^5)_yR^6_{4-x-y}$,

dans laquelle x + y vaut 1 à 4,
dans laquelle $R^4$ à $R^6$ sont choisis indépendamment parmi un radical organique comprenant 1 à 20 atomes de carbone, -OH et -H ;

b) un catalyseur d'hydrolyse ;
c) de l'eau ; et
d) éventuellement de la silicone ;

2) concentration sous pression réduite et le cas échéant température augmentée du premier mélange ; et
3) éventuellement ajout de silicone ;

pour obtenir un premier composant ;
ii) préparation d'une pâte colorée par mélange d'un deuxième mélange, contenant :

a) le premier composant ;
b) un pigment ;
c) éventuellement du graphite ;
d) un solvant ; et
e) de la silicone ;
pour obtenir une pâte colorée ; et
la pâte colorée contenant une proportion de 10 à 60% en poids de silicone et le rapport d'agent filmogène [% en poids]/silicone [% en poids] présentant une valeur de 0,2 ou plus et de 0,8 ou moins,
l'agent filmogène présentant la formule suivante :

$$Si\,(OR^4)_x(OC=OR^5)_yR^6_{4-x-y},$$

dans laquelle x, y et $R^4$ à $R^6$ sont définis comme ci-dessus ;

iii) application de la pâte colorée sur un substrat en verre ; et
iv) séchage de la pâte colorée appliquée pour obtenir un substrat en verre revêtu de pigment.

2. Substrat en verre revêtu selon la revendication 1, la couche A présentant un grain de 10 à 30%, de préférence de 15 à 28%, de préférence de 17 à 27%, plus préférablement de 19 à 25%.

3. Substrat en verre revêtu selon l'une quelconque des revendications précédentes, la couche A présentant un taux de transmission de lumière de 1-5%, de préférence de 2-4% ; et/ou la couche A présentant une transmission à 630 nm de 1-10%, de préférence de 5-8%.

4. Substrat en verre revêtu selon l'une quelconque des revendications précédentes, le système stratifié comprenant une couche B contenant :

a) une matrice,
la matrice contenant du silicium, du carbone et de l'oxygène ; et
b) un pigment, de préférence un pigment conférant un effet ; et
c) éventuellement du graphite ;

au moins une zone du substrat en verre étant revêtue par la couche B et de préférence la couche A et la couche B se recouvrant au moins partiellement ; et

la couche A et la couche B contenant de préférence au moins un pigment identique, plus préférablement la couche A et la couche B contenant les mêmes pigments.

5. Substrat en verre revêtu selon l'une quelconque des revendications précédentes, la zone revêtue par la couche B du substrat en verre présentant un taux de transmission de lumière qui est inférieur à celui de la couche A et/ou inférieur à 5%, de préférence inférieur à 1%, plus préférablement inférieur à 0,1%.

6. Substrat en verre revêtu selon l'une quelconque des revendications précédentes, l'épaisseur de la couche A et/ou de la couche B étant de 1-15 $\mu$m, de préférence de 2-10 $\mu$m, plus préférablement de 4 à 8 $\mu$m, plus préférablement de 5 à 7 $\mu$m, plus préférablement d'environ 6 $\mu$m.

7. Substrat en verre revêtu selon l'une quelconque des revendications précédentes, le pigment contenant Al, Si, Cr, Fe, Cu, Mn, Co ou Ti, de préférence Al, Si, Cr, Fe, Cu, Mn ou Co ; et/ou

la couche A et/ou la couche B contenant du graphite, de préférence 0,01 à 12% en poids, de préférence 1 à 10% en poids, plus préférablement 3 à 8% en poids de graphite ; et/ou
la couche A, de préférence la couche A et la couche B ne contenant pas de colorants.

8. Substrat en verre revêtu selon l'une quelconque des revendications précédentes, la couche A et/ou la couche B comprenant 0,4% en poids ou plus, de préférence 0,4 à 60% en poids, plus préférablement 1 à 60% en poids, plus préférablement 15 à 50% en poids, plus préférablement 18 à 40% en poids, plus préférablement 20 à 45% en poids, plus préférablement 25 à 35% en poids de silicone, de préférence de silicone fonctionnalisée, plus préférablement de résine de silicone fonctionnalisée, de préférence la silicone fonctionnalisée se trouvant sous forme réticulée, de préférence la résine de silicone fonctionnalisée se trouvant sous forme réticulée.

9. Substrat en verre revêtu selon l'une quelconque des revendications précédentes, la matrice contenant un ou plusieurs des motifs de liaison suivants :

i) [OSiR$^1$R$^2$] ;
dans lequel R$^1$ et R$^2$ sont choisis indépendamment parmi un radical organique comprenant 1 à 20 atomes de carbone, - OH et -H, de préférence R$^1$ et R$^2$ étant identiques ;
ii) [Si-O-Si] ; et
iii) [O$_3$SiR$^3$] ;

dans lequel R$^3$ est choisi indépendamment parmi un radical organique comprenant 1 à 20 atomes de carbone, -OH et - H.

10. Substrat en verre revêtu selon l'une quelconque des revendications précédentes, la pâte colorée étant additionnée de 15 à 50% en poids, de préférence de 18 à 40% en poids, plus préférablement de 20 à 45% en poids, plus préférablement de 25 à 35% en poids de silicone.

11. Substrat en verre revêtu selon l'une quelconque des revendications précédentes, le premier composant étant additionné de silicone.

12. Substrat en verre revêtu selon l'une quelconque des revendications précédentes, le solvant étant le diéthylèneglycolmonométhyléther ; et/ou

le catalyseur d'hydrolyse étant l'acide paratoluènesulfonique ; et/ou
la silicone étant une silicone fonctionnalisée, de préférence une silicone à fonctionnalité éthoxy, plus préférablement une résine de silicone-polyester à fonctionnalité éthoxy.

13. Substrat en verre revêtu selon l'une quelconque des revendications précédentes, R$^1$ à R$^6$ étant choisis indépendamment dans une liste constituée par alkyle, hétéroalkyle, cycloalkyle, alkyl-cycloalkyle, hétéroalkyl-cycloalkyle, hétérocycloalkyle, alkyl-hétérocycloalkyle, hétéroalkyl-hétérocycloalkyle, aryle, alkyl-aryle, hétéroalkyl-aryle, hétéroaryle, alkyl-hétéroaryle, hétéroalkyl-hétéroaryle, substitué ou non substitué et/ou ramifié ou non ramifié, -OH et H ;

de préférence constituée par alkyle, hétéroalkyle et alkyl-cycloalkyle à chaque fois non substitué, alkyl-cycloalkyle, hétéroalkyl-cycloalkyle, hétérocycloalkyle, alkyl-hétérocycloalkyle et hétéroalkyl-hétérocycloalkyle ; plus préférablement constituée par méthyle et éthyle ; et/ou x + y valant 3 ou 4, de préférence x valant 3 ou 4 et y valant 0 ou 1.

14. Procédé pour la fabrication d'un substrat en verre revêtu de pigment, la couche A étant formée sur le substrat en verre par les étapes suivantes :

i) préparation d'un premier composant par :

1) mélange d'un premier mélange, contenant :

a) un composé de formule $Si\,(OR^4)_x(OC=OR^5)_y R^6{}_{4-x-y}$,

dans laquelle x + y vaut 1 à 4,
dans laquelle $R^4$ à $R^6$ sont choisis indépendamment parmi un radical organique comprenant 1 à 20 atomes de carbone, -OH et -H ;

b) un catalyseur d'hydrolyse ;
c) de l'eau ; et
d) éventuellement de la silicone ;

2) concentration sous pression réduite et le cas échéant température augmentée du premier mélange ; et
3) éventuellement ajout de silicone ;

pour obtenir un premier composant ;
ii) préparation d'une pâte colorée par mélange d'un deuxième mélange, contenant :

a) le premier composant ;
b) un pigment ;
c) éventuellement du graphite ;
d) un solvant ; et
e) de la silicone ;
pour obtenir une pâte colorée ; et
la pâte colorée contenant une proportion de 10 à 60% en poids de silicone et le rapport d'agent filmogène [% en poids]/silicone [% en poids] présentant une valeur de 0,2 ou plus et de 0,8 ou moins,
l'agent filmogène présentant la formule suivante :

$$Si\,(OR^4)_x(OC=OR^5)_y R^6{}_{4-x-y},$$

dans laquelle x, y et $R^4$ à $R^6$ sont définis comme ci-dessus ;

iii) application de la pâte colorée sur un substrat en verre ; et
iv) séchage de la pâte colorée appliquée pour obtenir un substrat en verre revêtu de pigment.

15. Plaque de cuisson, four, vitre de foyer ou four à micro-ondes, de préférence plaque de cuisson, plus préférablement plaque de cuisson qui contient un écran à 7 segments ou un affichage, comprenant un substrat en verre revêtu de pigment selon l'une quelconque des revendications 1 à 13.

**Fig. 1**

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2223900 A1
- WO 2004085555 A2
- WO 2011144671 A1
- WO 2014086619 A2
- DE 04338360 A1
- EP 1611067 B1
- EP 1867613 A1